# EUROPEAN PATENT SPECIFICATION

(11) **EP 4 329 369 B1**
(45) Date of publication and mention of the grant of the patent: **27.05.2026**
(21) Application number: 22827588.9
(22) Date of filing: 22.06.2022
(51) Int. Cl.: H04W 36/14, H04L 41/14

(54) **INFORMATION TRANSMISSION METHOD AND APPARATUS**
INFORMATIONSÜBERTRAGUNGSVERFAHREN UND -VORRICHTUNG
PROCÉDÉ ET APPAREIL DE TRANSMISSION D'INFORMATIONS

(30) Priority: 23.06.2021 CN 202110698914
(43) Date of publication of application: 28.02.2024
(73) Proprietor: Huawei Technologies Co., Ltd., Shenzhen, Guangdong 518129 (CN)
(72) Inventor: HUANG, Xietian, Shenzhen, Guangdong 518129 (CN); CAO, Longyu, Shenzhen, Guangdong 518129 (CN); WANG, Yaoguang, Shenzhen, Guangdong 518129 (CN); YU, Yijun, Shenzhen, Guangdong 518129 (CN)
(74) Representative: Maiwald GmbH
(86) International application number: PCT/CN2022/100282
(87) International publication number: WO 2022/268095

(56) References cited:
- CN-A- 105 917 609
- CN-A- 110 430 068
- CN-A- 110 831 029
- CN-A- 110 831 029
- CN-A- 111 901 842
- CN-A- 112 313 906
- US-A1- 2017 347 279
- US-A1- 2021 021 494
- EUROPEAN COMMISSION: "D1.2: Affordable5G building blocks fitting in 5G system architecture Revision: v.1.0", 14 April 2021 (2021-04-14), pages 1 - 152, XP093198190, Retrieved from the Internet <URL:https://ec.europa.eu/research/participants/documents/downloadPublic?documentIds=080166e5dbd5789f&appId=PPGMS>

## Description

### TECHNICAL FIELD

This application relates to the communication field, and more specifically, to an information transmission method and an apparatus.

### BACKGROUND

US2021/021494A1 relates to Management Data Analytics (MDA) relation with Self-Organizing Network (SON) functions.

A management data analytics (Management Data Analytics, MDA) service may process and analyze data related to a network, a service event, and a status (for example, performance measurement data, minimization of drive tests (Minimization of Drive Tests, MDT), alarm data, configuration data, and network analytics data), and provide an analytics report. Functions of a management data analytics service producer (MDAS producer) include two parts: machine learning (Machine Learning, ML) model training (ML model training) and management data analytics (Management data analysis). Due to complexity of an ML model and an actual network, performance (for example, precision) of the model decreases gradually over time. An analytics result of the MDAS (Management Data Analytics Service, management data analytics service) is generated based on the ML model. Therefore, when the MDAS provides an analytics service, the analytics result needs to be verified in a timely manner to ensure data analytics effect. In an MDA processing procedure, after receiving the analytics report, a management data analytics service consumer (MDAS consumer) may verify the analytics report and provide feedback data to the MDAS producer.

However, in a conventional technology, the MDAS consumer verifies only output of a model in the analytics report, the MDAS consumer obtains an actual output value of the model, and the feedback data is rectified output of the model, namely, an actual output value. However, in practice, there may be a scenario in which the output of the model is correspondingly a recommendation and the MDAS consumer cannot feed back the actual output value of the model, or a case in which the output of the model is correspondingly a predicted value but the actual output value includes a plurality of pieces of data. In this case, a full feedback results in a waste of resources. Alternatively, there may be a case in which the actual output value of the model exists in a third-party device and the MDAS consumer cannot obtain the actual output value of the model. For example, in some scenarios, the actual output value of the model includes a plurality of pieces of data, and a full feedback results in a waste of resources. For another example, in an energy saving scenario, the MDAS producer provides an optimal energy saving policy suggestion to meet a specific objective, and the MDAS consumer cannot obtain an actual optimal energy saving policy, and therefore cannot feed back the actual output value of the model. For another example, in a handover optimization scenario, the MDAS consumer may be a source base station (gNodeB, gNB). In a standard handover procedure, a source gNB can select a target gNB for a handover based only on radio signal quality, and cannot predict actual quality of experience (Quality of Experience, QoE) obtained after user equipment (User Equipment, UE) is handed over to a specific target gNB, namely, an actual output value. In these scenarios, if solutions in the conventional technology are used, the MDAS consumer cannot feed back the actual output value of the model, or a feedback mechanism is not flexible enough, causing a waste of resources and affecting data analytics effect.

### SUMMARY

This application provides an information transmission method and an apparatus, to provide a flexible feedback mechanism, so that a second network device can determine feedback information based on a first type, sent by a first network device, of the feedback information, and further send the feedback information to the first network device, and the first network device can determine performance of a model based on the feedback information. Further, if the performance of the model is poor, a data analytics policy is adjusted, to ensure data analytics effect. The invention and its scope of protection is defined in the appended independent claims. Embodiments of the invention are defined in the appended dependent claims. The following aspects and implementations of the summary provide examples of how tehnical subject matters can be combined.

According to a first aspect, an information transmission method is provided. A first network device sends a first type of feedback information to a second network device, where the first type includes one or more of the following: a model evaluation indicator, operation indication information, and a network performance indicator. The model evaluation indicator indicates performance of a model, the operation indication information indicates an operation to be performed based on an analytics result of the model, the network performance indicator indicates a network indicator obtained based on the analytics result of the model, and the first type is used to request the feedback information. The first network device receives the feedback information from the second network device. The first network device determines the performance of the model based on the feedback information.

The model evaluation indicator may be obtained based on a predicted value of the model and an actual value of the model, for example, a difference between the predicted value and the actual value of the model, or an average value of the difference between the predicted value and the actual value of the model. The operation indication information may indicate an operation to be performed by the second network device based on the predicted value of the model or a recommendation provided by the first network device, and may include specific operation information, a timestamp, or the like. The network performance indicator may be some network performance indicators that are obtained after the second network device performs the operation based on the predicted value of the model or the recommendation provided by the first network device.

According to the communication method provided in this application, the first network device sends the first type of the feedback information to the second network device. In this way, a type of the feedback information sent to the first network device by the second network device can be configured flexibly, and the first network device can obtain the feedback information according to a requirement of the first network device and a feedback capability of the second network device, and determine the performance of the model based on the feedback information. In some scenarios, a transmission resource may be further saved.

With reference to the first aspect, in some implementations of the first aspect, after receiving the feedback information, the first network device receives the actual value of the model or other data, for example, the network performance indicator, from a third network device based on the feedback information. Further, the first network device may determine the performance of the model based on the actual value of the model or the other data and the feedback information. In this implementation, the first network device may obtain more data from the third network device based on the feedback information, to provide more data support for evaluation of the model and improve effect of the evaluation of the model.

With reference to the first aspect, in some implementations of the first aspect, the first network device receives first indication information from the second network device, where the first indication information indicates a second type, supported by the second network device, of the feedback information, namely, the feedback capability of the second network device. The first network device receives the first indication information, and determines the first type of the feedback information based on the second type indicated by the first indication information. In this implementation, the first network device may configure the first type based on a type, supported by the second network device, of the feedback information, to avoid a waste of resources and the like caused due to a configuration error.

The first indication information may be sent before the first network device sends the first type of the feedback information, or may be sent after the first network device sends the first type of the feedback information and the second network device finds that the first type is beyond the feedback capability of the second network device.

Alternatively, the second type may be by a default value, and does not need to be indicated by the first indication information.

According to a second aspect, an information transmission method is provided. A second network device receives a first type of feedback information from a first network device, where the first type includes one or more of the following: a model evaluation indicator, operation indication information, and a network performance indicator. The model evaluation indicator indicates performance of a model, the operation indication information indicates an operation to be performed based on an analytics result of the model, the network performance indicator indicates a network indicator obtained based on the analytics result of the model, and the first type is used to request the feedback information. The second network device sends the feedback information to the first network device based on the first type of the feedback information.

The model evaluation indicator may be obtained based on a predicted value of the model and an actual value of the model, for example, a difference between the predicted value and the actual value of the model, or an average value of the difference between the predicted value and the actual value of the model. The operation indication information may indicate an operation to be performed by the second network device based on the predicted value of the model or a recommendation provided by the first network device, and may include specific operation information, a timestamp, or the like. The network performance indicator may be some network performance indicators that are obtained after the second network device performs the operation based on the predicted value of the model or the recommendation provided by the first network device.

According to the communication method provided in this application, the second network device receives the first type of the feedback information from the first network device. In this way, a type of the feedback information sent to the first network device by the second network device can be configured flexibly, and the first network device can obtain the feedback information according to a requirement of the first network device, and further determine the performance of the model based on the feedback information. In some scenarios, a transmission resource may be further saved.

With reference to the second aspect, in some implementations of the second aspect, the second network device itself cannot generate feedback information corresponding to the first type, and the second network device receives the feedback information from a fourth network device, and sends the feedback information to the first network device.

With reference to the second aspect, in some implementations of the second aspect, the second network device generates feedback information corresponding to the first type, and sends the feedback information to the first network device.

With reference to the second aspect, in some implementations of the second aspect, the second network device receives the actual value of the model from a fifth network device, generates the feedback information based on the actual value of the model and the first type, and sends the feedback information to the first network device.

With reference to the second aspect, in some implementations of the second aspect, the second network device sends first indication information to the first network device, where the first indication information indicates a second type, supported by the second network device, of the feedback information, so that the first network device can determine the first type of the feedback information based on the second type. In this implementation, the first network device may configure the first type based on a type, supported by the second network device, of the feedback information, to avoid a problem caused due to a configuration error, such as a waste of resources, or failure of the second network device to provide feedback.

The first indication information may be sent before the first network device sends the first type of the feedback information, or may be sent after the first network device sends the first type of the feedback information and the second network device finds that the first type is beyond a feedback capability of the second network device.

Alternatively, the second type may be a default value, and does not need to be indicated by the first indication information.

According to a third aspect, a communication apparatus is provided, including units configured to perform the steps of the communication method in the first aspect and the implementations of the first aspect.

In a design, the communication apparatus is a communication chip. The communication chip may include: an input circuit or interface configured to send information or data, and an output circuit or interface configured to receive information or data.

In another design, the communication apparatus is a communication device (for example, a first network device). The communication device may include: a transmitter configured to send information, and a receiver configured to receive information or data.

According to a fourth aspect, a communication apparatus is provided, including units configured to perform the steps of the communication method in the second aspect and the implementations of the second aspect.

In a design, the communication apparatus is a communication chip. The communication chip may include: an input circuit or interface configured to send information or data, and an output circuit or interface configured to receive information or data.

In another design, the communication apparatus is a communication device (for example, a second network device). The communication chip may include: a transmitter configured to send information, and a receiver configured to receive information or data.

According to a fifth aspect, a communication device is provided, including a processor and a memory. The memory is configured to store a computer program, and the processor is configured to invoke the computer program from the memory and run the computer program, so that the communication device performs the communication method in the first aspect or the second aspect and the implementations of the first aspect or the second aspect.

Optionally, there are one or more processors, and there are one or more memories.

Optionally, the memory may be integrated with the processor, or the memory and the processor are disposed separately.

Optionally, the communication device further includes: a transmitter (transmitting device) and a receiver (receiving device).

According to a sixth aspect, a computer program product is provided. The computer program product includes: a computer program (also referred to as code or instructions). When the computer program is run, a computer is enabled to perform the communication method in the first aspect or the second aspect and the implementations of the first aspect or the second aspect.

According to a seventh aspect, a computer-readable medium is provided. The computer-readable medium stores a computer program (also referred to as code or instructions). When the computer program is run on a computer, the computer is enabled to perform the communication method in the first aspect or the second aspect and the implementations of the first aspect or the second aspect.

According to an eighth aspect, a communication system is provided. The system includes: at least one of the apparatus according to any implementation in the third aspect and the apparatus according to any implementation in the fourth aspect.

According to a ninth aspect, a chip system is provided, including a memory and a processor. The memory is configured to store a computer program, and the processor is configured to invoke the computer program from the memory and run the computer program, so that a communication device on which the chip system is installed performs the communication method in the first aspect or the second aspect and the implementations of the first aspect or the second aspect.

The chip system may include: an input circuit or interface configured to send information or data, and an output circuit or interface configured to receive information or data.

### BRIEF DESCRIPTION OF DRAWINGS

FIG. 1 is a flowchart of a verification and feedback mechanism for a management data analytics service;
FIG. 2(a) and FIG. 2(b) show an application scenario according to an embodiment of this application;
FIG. 3 is a schematic diagram of an example of a method for feeding back data analytics effect according to this application;
FIG. 4A and FIG. 4B are a schematic diagram of another example of a method for feeding back data analytics effect according to this application;
FIG. 5 is a schematic diagram of still another example of a method for feeding back data analytics effect according to this application;
FIG. 6 is a schematic diagram of yet another example of a method for feeding back data analytics effect according to this application;
FIG. 7 is a schematic diagram of an example of a communication apparatus according to an embodiment of this application; and
FIG. 8 is a schematic diagram of another example of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), and a worldwide interoperability for microwave access (Worldwide Interoperability for Microwave Access, WiMAX) communication system, a 5^{th} generation (5^{th} Generation, 5G) system, or new radio (New Radio, NR) system.

A network device in embodiments of this application may be a base transceiver station (Base Transceiver Station, BTS) in the global system for mobile communications (Global System for Mobile communications, GSM) or in the code division multiple access (Code Division Multiple Access, CDMA) system, or may be a NodeB (NodeB, NB) in the wideband code division multiple access (Wideband Code Division Multiple Access, WCDMA) system, or may be an evolved NodeB (Evolved NodeB, eNB, or eNodeB) in the LTE system, or may be a radio controller in a cloud radio access network (Cloud Radio Access Network, CRAN) scenario. Alternatively, the access network device may be a relay node, an access point, a vehicle-mounted device, a wearable device, a network device in a future 5G network, a network device in a future evolved PLMN network, or the like. This is not limited in embodiments of this application.

A network element or module in embodiments of this application may include:
an MDAS: a management data analytics service, which may provide a particular type of management data analytics report;
MDA: management data analytics, which is a logical entity that provides the management data analytics service and has model training and management data analytics functions;
a model training module: an internal functional module of the MDA, which may perform model training by using training data, to generate an available model;
a management data analytics module: an internal functional module of the MDA, which may analyze management data (such as performance measurement data, minimization of drive tests, alarm data, configuration data, and network analytics data) by using AI/ML technologies, and generate an analytics report;
an MDAS producer: a producer of the management data analytics service, which may provide the MDAS to the outside; and
an MDAS consumer: a consumer of the management data analytics service, which may invoke the MDAS.

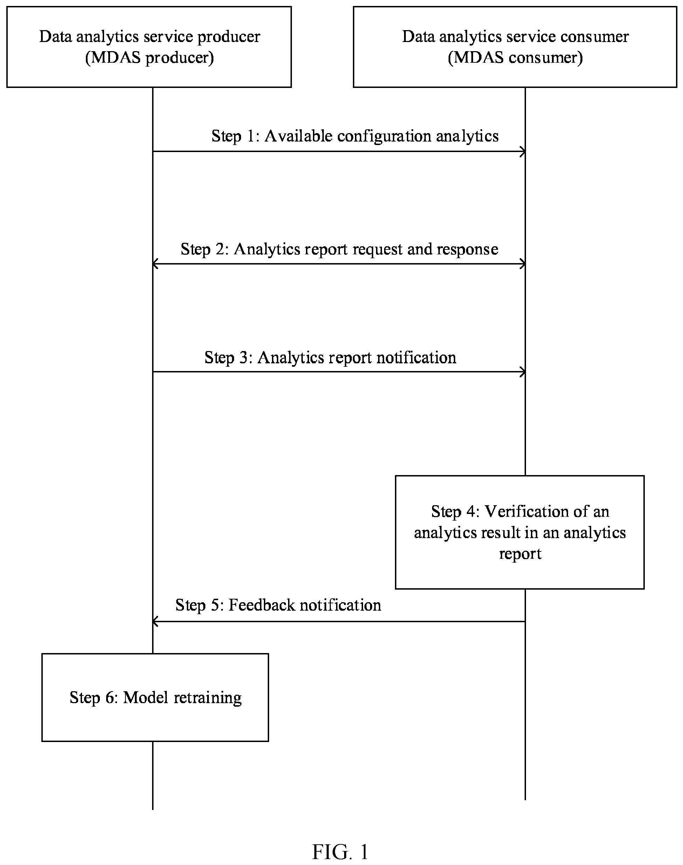

FIG. 1 is a flowchart of a verification and feedback mechanism for a management data analytics service in a conventional technology. As shown in FIG. 1, steps of the verification and feedback mechanism for the MDAS are as follows:

Step 1: Configuration analytics.

An MDAS producer sends a first configuration information to an MDAS consumer, where the first configuration information includes an analytics identifier (analytics ID) to indicate an analytics type that may be provided by the MDAS producer. If a plurality of types of analytics may be provided, a list of analytics identifiers is included. The analytics ID is an analytics identifier. Each analytics ID uniquely identifies a type of analytics. Optional values are handover optimization (handover optimization), coverage issue analysis (coverage issue analysis), MDA assisted energy saving (MDA assisted energy saving), and the like.

Step 2: Analytics report request and response.

The MDAS consumer sends an analytics report request message to the MDAS producer to request a specified analytics report. Content of the message includes an analytics identifier (analytics ID), and optionally, further includes: an analytics area (area), a report method (report method), and a report period (period). The MDAS producer returns a response message to the MDAS consumer. The response message includes the analytics identifier (analytics ID) to indicate that the request has been received.

Step 3: Analytics report notification.

After receiving the analytics report request, the MDAS producer analyzes data, prepares the analytics report, and sends the analytics report notification to the MDAS consumer. Content of the message includes an analytics identifier (analytics ID), a generation time of analytics (timestamp of analytics), a valid period (valid period) of analytics, a confidence level (confidence level) of an analytics result, and a specific analytics result (analytics results). The analytics result is output of a model, for example, a specific predicted value (predicted value) and a recommendation (recommendation).

Steps 4 and 5: Analytics report verification and feedback.

After receiving the analytics report provided by the MDAS producer, the MDAS consumer verifies the analytics result (analytics results). If it is found through verification that an actual output of the model is inconsistent with the output of the model included in the analytics report, the MDAS consumer sends a feedback notification to the MDAS producer. The feedback notification includes the verified analytics identifier (analytics ID) and rectified data (rectified data). For example, in an alarm analytics scenario (analytics ID = alarm incident analysis), the analytics report includes information about an alarm source. If the MDAS consumer (for example, a fault supervision management service (fault supervision MnS)) detects that an actual alarm source is inconsistent with the alarm source provided in the analytics report, the MDAS consumer provides feedback to the MDAS producer. The rectified data (rectified data) fed back is information about the actual alarm source.

Step 6: Model retraining.

After receiving the feedback from the MDAS consumer, the MDAS producer may use feedback data to retrain the model, so as to improve performance of the model, thereby improving accuracy of the data analytics result.

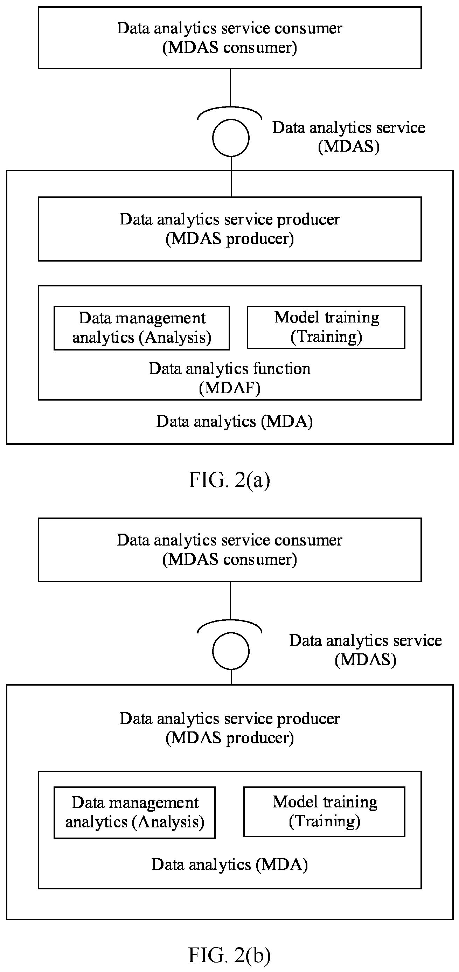

FIG. 2(a) and FIG. 2(b) are a diagram of a system architecture according to an embodiment of this application. As shown in the figure, an MDAS producer is a device that provides a management data analytics service, an MDA is a logical entity that carries a management data analytics function, and an MDAS consumer may be any device that may invoke the MDAS. In actual deployment, there are a plurality of possibilities that devices play roles of the MDAS producer and the MDAS consumer. In this embodiment of this application, a deployment architecture may be one or more of the following six scenarios:
1. The MDAS producer is a network element management system (Element Management System, EMS), and the MDAS consumer is a network management system (Network Management System, NMS).
2. The MDAS producer is an NMS/EMS, and the MDAS consumer is a gNB.
3. The MDAS producer is an NMS/EMS, and the MDAS consumer is a network data analytics function (Network Data Analytics Function, NWDAF).
4. The MDAS producer is an NMS/EMS, and the MDAS consumer is a manual operator.
5. The MDAS producer is an NMS/EMS, and the MDAS consumer is a third-party network service optimization tool.
6. Both the MDAS producer and the MDAS consumer are NMSs, or both the MDAS producer and the MDAS consumer are EMSs.

As shown in FIG. 2(a) and FIG. 2(b), a block in the figure represents a logical function or a logical entity, and an arc and a circle in the figure are a common representation manner of a service-oriented architecture, and connect a service producer and a service consumer. A side with the circle represents the service producer, and a side with the arc represents the service consumer. As shown in FIG. 2(a), the MDA is a logical entity that carries a management data analytics function, and includes two parts: the MDAF and the MDAS producer. The MDAS producer is a service interface producer, and the MDAF is an internal processing function of the MDA, including a data analytics function and a model training function. As shown in FIG. 2(b), the MDAS producer is a service producer, and the MDA is equivalent to the MDAF in FIG. 2(a), and is an internal processing function of the MDAS producer, including a data analytics function and a model training function.

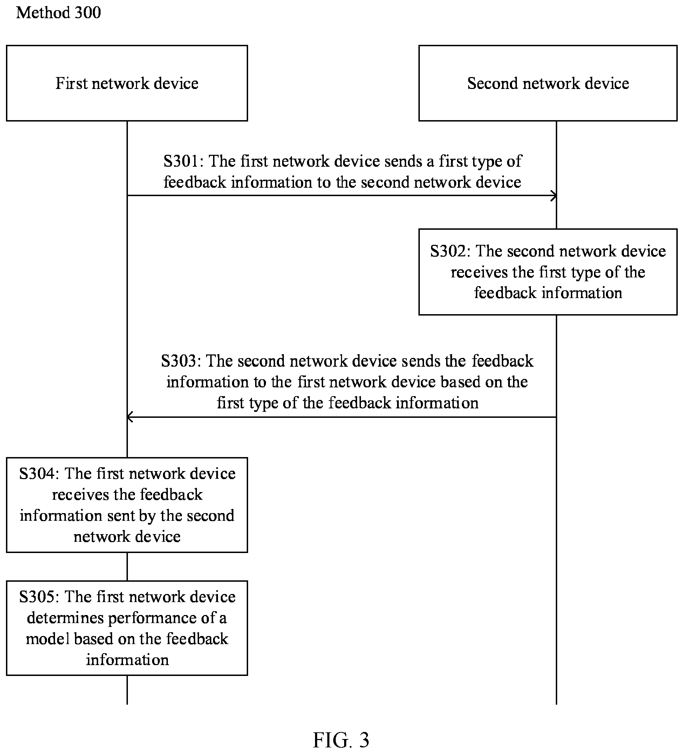

FIG. 3 shows an example of a method for feeding back data analytics effect according to this application. As shown in the figure, the method 300 includes the following steps.

S301: A first network device sends a first type of feedback information to a second network device.

Specifically, the first type includes one or more of the following types: a model evaluation indicator, operation indication information, and a network performance indicator.

The model evaluation indicator is used to evaluate performance of a model. Specifically, the model evaluation indicator is an indicator that may be used to evaluate the performance of the model. Common evaluation indicators include a precision rate, an accuracy rate, an error rate, a recall rate, a mean squared error, a root mean squared error, a root mean squared logarithmic error, an average absolute error, and the like. The first network device may determine the performance of the model based on the model evaluation indicator that is fed back, and adjust a model with poor performance. The model evaluation indicator may be obtained based on a predicted value of the model provided by the first network device and an actual value of the model obtained by the second network device.

By way of example and not limitation, in some scenarios, the first network device requires the second network device to feed back the model evaluation indicator, and the second network device may obtain the actual value of the model. Further, the second network device may obtain, based on the predicted value of the model and the actual value of the model, a first indicator value as a value of the model evaluation indicator for feedback.

By way of example and not limitation, in some scenarios, the first network device requires the second network device to feed back the model evaluation indicator, and the second network device cannot obtain the actual value of the model. The second network device may request the actual value of the model from a fifth network device. Further, the second network device obtains, based on the actual value of the model obtained through requesting and the predicted value provided by the first network device, a first indicator value as a value of the model evaluation indicator for feedback.

It should be noted that the first indicator value may be obtained through calculation based on the predicted value of the model and at least one actual value of the model, and may be the precision rate, accuracy rate, error rate, recall rate, mean squared error, root mean squared error, root mean squared logarithmic error, average absolute error, or the like of the model. In some scenarios, for example, when there are a plurality of actual values, some feedback resources may be saved by feeding back the model evaluation indicator.

The operation indication information is used to describe a specific action to be taken based on a recommendation of the first network device or based on a predicted value of the first network device after the second network device receives an analytics report, and includes the specific action to be taken, a timestamp of the action to be taken, and the like.

In some embodiments, the first network device may collect, from a third network device based on the operation indication information fed back by the second network device, related data or an actual value of the model obtained after the second network device performs a recommended action, to determine the performance of the model, thereby adjusting a model with poor performance. It should be noted that the related data may be a corresponding network performance indicator obtained after the recommended action is performed.

By way of example and not limitation, the first network device may collect, from the third network device based on the operation indication information fed back by the second network device, the actual value of the model obtained after the recommended action is performed. In a handover optimization scenario, the second network device may be a source base station. The second network device may request a handover optimization analytics report from the first network device, and make a handover decision with assistance of an MDAS. The handover optimization analytics report includes the recommended action, and may further include a predicted value obtained after the action is performed, namely, a predicted QoE. In other words, the predicted QoE is QoE that can be achieved after UE is handed over to a specific target gNB. A source gNB may select, with reference to a predicted result in the analytics report, a most appropriate target gNB to perform a handover. In this case, the first network device requires the second network device to feed back the operation indication information, and the second network device may return a handover action to be taken and a timestamp of the action to be taken. Optionally, the first network device may obtain actual QoE from the third network device (which may be a target base station) based on the operation indication information fed back by the second network device, and then evaluate the performance of the model based on the feedback information and the actual value of the model.

By way of example and not limitation, in an energy saving optimization scenario, the analytics report provided by the first network device to the second network device includes an energy saving suggestion. Specifically, the suggestion included may be: a recommended cell to enter an energy saving state (recommended NR Cell to enter ES state), a recommended candidate cell with precedence for taking over traffic of an energy saving cell (recommended candidate cells with precedence for taking over the traffic of the ES-Cell), and a time to enable and disable an energy saving state (a time period, during which ES is or not allowed). In this scenario, the analytics report provides a recommendation. After performing an action corresponding to the recommendation, the second network device feeds back the operation indication information to the first network device. The first network device receives the operation indication information, and may obtain, from the third network device, a network performance indicator obtained after the action is performed, and then evaluate the model based on the feedback information and the network performance indicator.

The network performance indicator is an indicator that is defined by the first network device and that may describe network performance, for example, a key performance indicator (Key Performance Indicator, KPI) defined in standards, or a customized optimization objective function. The second network device may perform an action based on the predicted value of the model provided by the first network device or the recommendation provided by the first network device, obtain some network performance indicators after performing the action, and further send the feedback information to the first network device. The feedback information may be data corresponding to the network performance indicator. The first network device determines, based on the network performance indicator fed back, whether expected network performance is achieved, determines the performance of the model, and adjusts a model with poor performance.

In some possible implementations, the network performance indicator may be a network performance indicator obtained after the recommended action is performed. It should be understood that the recommended action may correspond to the operation indication information. For example, the first network device may request the second network device to feed back the operation indication information, and content of the operation indication information fed back by the second network device is an action to be performed based on the recommendation. Then, the first network device may obtain, from the third network device based on the operation indication information, the network performance indicator obtained after the recommended action is performed, and evaluate the model. The first network device may alternatively request the second network device to directly feed back the network performance indicator. After performing the recommended action, the second network device obtains the network performance indicator from a fourth network device, and feeds back the network performance indicator to the first network device as the feedback information. For a specific example, refer to related descriptions in the operation indication information.

It should be noted that the first type of the feedback information may be configured by using feedbackInfo signaling. In different scenarios, an optional value of feedbackInfo is different. Specifically, the value of feedbackInfo indicates the first type of the feedback information sent by the second network device to the first network device. Further, the value may determine specific content of the feedback information needed in the type. By way of example and not limitation, in the handover optimization scenario, feedbackInfo = actionTaken indication indicates that the second network device needs to feed back a finally determined target gNB identifier and a handover time point. In the energy saving scenario, feedbackInfo = actionTaken indication indicates that the second network device needs to feed back a finally taken energy saving action, namely, a cell identifier and a time point for enabling/disabling an energy saving feature. In the energy saving scenario, feedbackInfo = energy efficiency (Energy Efficiency, EE) indicates that the second network device needs to feed back a value of an energy efficiency KPI obtained after a specified energy saving action is performed. A possible manner of defining the EE KPI is: EE = Total network throughput/Total network energy consumption.

It should be noted that the first type of the feedback information may be separately sent as a separate message before an analytics report notification is sent, or may be included in the analytics report notification.

In some embodiments, a second type, supported by the second network device, of the feedback information may be known by the first network device by default. That is, a type of the feedback information that can be fed back by the second network device is known by the first network device. Further, the first network device determines the first type of the feedback information based on the second type. That is, the first network device indicates, based on a feedback capability of the second network device, the second network device to feed back a specific type of information.

In some embodiments, the first network device does not know a second type, supported by the second network device, of the feedback information, and the second network device may send first indication information to the first network device, where the first indication information indicates the second type, supported by the second network device, of the feedback information. That is, the second network device reports a feedback capability. Further, the first network device determines the first type of the feedback information based on the first indication information. Optionally, the first indication information may be sent by the second network device to the first network device before the first network device sends the first type of the feedback information, to indicate a reporting capability of the second network device in advance. Optionally, the first indication information may be sent to the first network device after the first network device sends the first type of the feedback information to the second network device. Specifically, the second network device receives the first type of the feedback information, finds that the second network device cannot report feedback information corresponding to the first type, and further sends the first indication information to the first network device to report the feedback capability.

It should be noted that the first indication information indicates a type of feedback information that can be fed back by the second network device for a particular analytics type. Optionally, the first indication information includes an analytics identifier, and further includes a type of feedback information that can be fed back and that corresponds to the analytics identifier.

It should be noted that before step S301, the first network device sends first configuration information to the second network device. For details, refer to related descriptions in a method 400.

It should be noted that, after the first network device sends the first configuration information to the second network device, the second network device sends an analytics report request message to the first network device. The analytics report request message is used to request an analytics report of a specified analytics type. Optionally, after receiving the analytics report request message from the second network device, the first network device further sends a response message to the second network device. The response message indicates that the first network device has received the analytics report request message. By way of example and not limitation, the response message may include an analytics identifier. The analytics identifier corresponds to an analytics identifier in the analytics report request message. It should be noted that the first network device receives the analytics report request message, further analyzes data based on the analytics report request message, prepares the analytics report, and sends the analytics report notification to the second terminal device. The analytics report notification may include but is not limited to: an analytics identifier (analytics ID), a generation time of analytics (timestamp of analytics), a valid period (valid period) of analytics, a confidence level (confidence level) of an analytics result, and a specific analytics result (analytics results). Optionally, the analytics result includes output of the model, for example, a specific predicted value (predicted value) and the recommendation (recommendation).

It should be noted that the first type of the feedback information may be included in the analytics report and sent, or may be sent as a separate message before the analytics report is sent. The first type of the feedback information is sent separately before the analytics report notification. Furthermore, before the second network device sends the analytics report request message to the first network device, the first network device sends the first type of the feedback information to the second network device separately, and the first type of the feedback information is not included in the analytics report notification. For a same analytics report type, the first type of the feedback information needs to be sent only once, without a need to repeatedly carry the first type of the same feedback information in each analytics report notification. This may reduce some transmission overheads.

It should be noted that the first type of the feedback information may be determined by the first network device with reference to at least one of the following factors: an analytics type, where the analytics type is a type required in the analytics report request message; and
a default second type of the feedback information, or the second type of the feedback information that is indicated in the first indication information sent by the second network device and that can be fed back by the second network device.

By way of example and not limitation, in the energy saving scenario, the value of feedbackInfo may be actionTaken indication or the EE KPI. However, if the first indication information sent by the second network device indicates that the type of the feedback information that can be fed back by the second network device includes only actionTaken indication, feedbackInfo can be configured only as actionTaken indication in this scenario.

S302: The second network device receives the first type of the feedback information.

S303: The second network device sends the feedback information to the first network device based on the first type of the feedback information.

Optionally, the feedback information may be determined by the second network device based on the first type of the feedback information. For example, the second network device may output the actual value of the model, and the first type indicates an average value of a difference between a predicted value of output of the model and the actual value of the model as the value of the model evaluation indicator for feedback. In this case, the second network device may obtain the average value based on the first type for feedback.

Alternatively, the feedback information may be obtained by the second network device from the fourth network device. For example, if the first type of the feedback information required by the first network device is the network performance indicator, the second network device may send the first type to the fourth network device, and obtain the network performance indicator from the fourth network device. Alternatively, the feedback information may be determined based on the actual value of the model and the predicted value of the model in the analytics report after the second network device obtains the actual value of the model from the fifth network device. Specifically, the second network device sends the first type of the feedback information to the fifth network device, and further receives the actual value of the model from the fifth network device. For a specific example, refer to related descriptions in step S301.

S304: The first network device receives the feedback information sent by the second network device.

S305: The first network device determines the performance of the model based on the feedback information.

Optionally, after receiving the feedback information sent by the second network device, the first network device sends first request information to the third network device based on content of the feedback information. The first request information indicates that the first network device requests the actual value of the model or other data from the third network device. It should be noted that the other data may be a network performance indicator corresponding to the operation indication information in the related example in step S301. It should be noted that a model for which performance needs to be determined by the first network device is a model obtained through training by the first network device. The third network device receives the first request information, and further sends the actual value of the model or other data to the first network device based on the first request information. The third network device may be a third-party device that can provide data. By way of example and not limitation, the third network device may be: an application function (Application Function, AF), a network data analytics function (Network Data Analytics Function, NWDAF), a base station, or the like. For example, in the handover optimization scenario, feedbackInfo = actionTaken indication in step S301. The feedback information of the second network device is a finally determined target base station identifier and a handover time point. The first network device sends the first request information to the third network device as needed, to further request actual quality of experience (Quality of Experience, QoE) obtained after a terminal device is handed over to an actual target base station. In this scenario, the third network device is a third-party device that can provide QoE information, and the third network device may be the target base station, the AF, or the like.

In some embodiments, the first network device determines the performance of the model based on the feedback information, or determines the performance of the model based on the feedback information and the actual value of the model, or determines the performance of the model based on the feedback information and the network performance indicator, and further adjusts a data analytics policy based on the performance of the model. It should be noted that the actual value of the model or the network performance indicator is obtained from the third-party device after the first network device receives the feedback information.

By way of example and not limitation, the first network device may adjust the data analytics policy from at least one of the following aspects:
retraining the model based on the feedback information;
if another model is available, analyzing data by using the another model, for example, a model with higher precision; and
collecting new training data to train a new model from scratch, and optionally, re-performing data preprocessing, feature selection, or the like.

Optionally, retraining the model or training a new model takes a long time, and consequently, the model may be temporarily unavailable. In a possible implementation, the first network device sends second configuration information to the second network device, where the second configuration information includes an analytics identifier. For example, the second configuration information indicates that an analytics type corresponding to the analytics identifier is temporarily unavailable.

This embodiment provides a flexible method for feeding back data analytics effect. The second network device may feed back, to the first network device based on a configuration of the first network device, feedback information of a type needed by the first network device, thereby improving feedback flexibility. In some scenarios, a transmission resource may be further saved. Correspondingly, the first network device may determine the performance of the model based on the feedback information, and if the performance of the model is relatively poor, further adjust the data analytics policy to ensure data analytics effect.

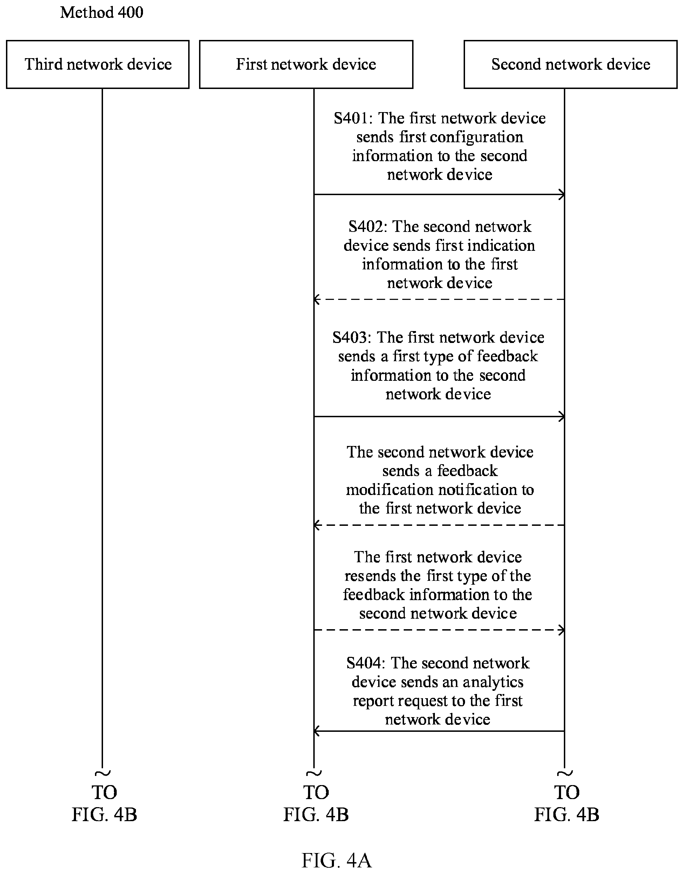

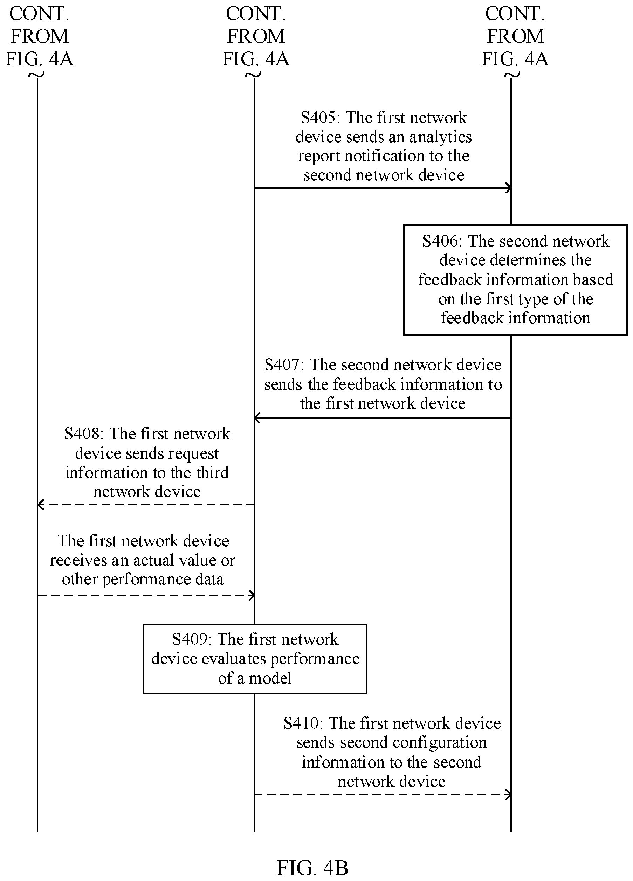

FIG. 4A and FIG. 4B are a schematic diagram of another example of a method for feeding back data analytics effect according to an embodiment of this application. As shown in FIG. 4A and FIG. 4B, the method 400 includes the following steps.

S401: A first network device sends first configuration information to a second network device.

Specifically, the first configuration information includes an analytics identifier (analytics ID), and the analytics identifier indicates an analytics type that can be provided by the first network device. Optionally, if the first network device may provide a plurality of types of analytics, a list of analytics identifiers may be included. A value of the analytics type under each analytics ID uniquely identifies a type of analytics. By way of example and not limitation, the value may be: handover optimization (handover optimization), coverage issue analysis (coverage issue analysis), MDA assisted energy saving (MDA assisted energy saving), or the like.

S402: The second network device sends first indication information to the first network device, where the first indication information indicates a second type, supported by the second network device, of the feedback information.

It should be understood that step S402 is optional, and the second type may be set to a default value by the first network device.

Specifically, the first indication information may indicate the second type, supported by the second network device for a particular analytics type, of the feedback information. The first indication information may include an analytics ID and the second type, supported and corresponding to the analytics ID, of the feedback information, and the second type, supported, of the feedback information may be represented by availableFeedbackInfo. A type, supported by the second network device, of the feedback information includes but is not limited to the following:

A model evaluation indicator: an indicator that may be used to evaluate performance of a model. For a specific description, refer to the method 300.

Operation indication information: The operation indication information indicates information of an action to be taken after the second network device receives an analytics report. For a specific description, refer to the method 300.

A network performance indicator: an indicator that may be used to describe network performance. For a specific description, refer to the method 300.

S403: The first network device sends a first type of the feedback information to the second network device.

Specifically, content of the message may include an analytics identifier (analytics ID) and the first type of the feedback information (feedbackInfo) corresponding to an analytics type of the identifier. An optional value of feedbackInfo includes but is not limited to: the model evaluation indicator, the operation indication information, the network performance indicator, and the like.

It should be noted that the first type of the feedback information may be sent as a separate piece of information in step S403 by the first network device to the second network device, or may be included in an analytics report notification message in step S405. In some embodiments, the first type of the feedback information is sent in advance as a separate piece of information by the first network device to the second network device. In this way, the information is decoupled from an analytics report notification. For a same analytics type, the first type of the feedback information needs to be configured only once, without a need to repeatedly carry the information in each analytics report notification. This reduces overheads of some transmission resources.

It should be noted that, if step S402 is not performed before step S403 and the first network device does not default the second type, the first network device may configure the first type incorrectly, and the first type of the feedback information sent by the first network device to the second network device may be a type that is not supported by the second network device, of the feedback information. Optionally, after the first network device configures the first type not supported, the second network device sends a feedback modification notification to the first network device to indicate the second type, supported by the second network device, of the feedback information. The first network device redetermines the first type of the feedback information based on the feedback modification notification, and resends the message to the second network device. It should be noted that the message of the first type of the feedback information sent for the first time and the message of the first type of the feedback information resent may be the same message. It should be noted that the feedback modification notification may include the type, not supported, of the feedback information (unavaliableInfo) and a reason (reason) why the type of the feedback information is not supported, and may further include a type, supported by the second network device, of the feedback information (avaliableInfo). Values of unavaliableInfo and avaliableInfo include but are not limited to: the model evaluation indicator, the operation indication information, the network performance indicator, and the like. It should be noted that the feedback modification notification and the first indication information may be the same message.

S404: The second network device sends an analytics report request to the first network device.

Specifically, the second network device may request an analytics report of a particular analytics type. Content of the message includes an analytics ID. Optionally, the message may further include one or more of the following: an analytics area (area), a report method (area), a report period (area), and the like.

Optionally, the first network device receives the analytics report request, and sends a response message to the second network device. The response message may include an analytics ID to indicate that the first network device has received the request.

S405: The first network device sends the analytics report notification to the second network device.

It should be noted that the message of the first type of the feedback information in step S403 may be included in the analytics report notification, and is not sent as a separate message.

Specifically, after receiving the analytics report request in step S404, the first network device analyzes data, prepares the analytics report, and further sends the analytics report notification to the second network device upon request of the second network device. The analytics report notification includes but is not limited to: an analytics identifier (analytics ID), a generation time of analytics (timestamp of analytics), a valid period (valid period) of analytics, a confidence level (confidence level) of an analytics result, and a specific analytics result (analytics results). When the first type of the feedback information is included in the analytics report notification, the message further includes the first type of the feedback information (feedbackInfo) and a corresponding value.

S406: The second network device determines the feedback information based on the first type of the feedback information.

Optionally, the second network device may obtain an actual value of the model, process the data, and determine the feedback information. For a specific example, refer to related descriptions in the method 300.

Optionally, the second network device may send the first type of the feedback information to a fourth network device, and receive the feedback information from the fourth network device. For a specific example, refer to related descriptions in the method 300.

Optionally, the second network device may send request information to a fifth network device, obtain the actual value of the model from the fifth network device, and determine the feedback information based on the actual value and the first type of the feedback information. For a specific example, refer to related descriptions in the method 300.

S407: The second network device sends the feedback information to the first network device.

S408: The first network device sends the request information to a third network device.

It should be noted that this step is optional.

Specifically, after receiving the feedback information, the first network device needs more data to evaluate the performance of the model, and may send the request information to the third network device to request more other data or the actual value of the model. By way of example and not limitation, in a handover scenario, the first type corresponding to the feedback information returned by the second network device is the operation indication information, and the feedback information of the second network device may include an action to be performed and a timestamp of the action to be performed. After receiving the feedback information, the first network device may obtain actual QoE of UE from the third network device (a target base station) to evaluate the performance of the model. By way of example and not limitation, in an energy saving scenario, the first type corresponding to the feedback information returned by the second network device is the operation indication information, and the feedback information of the second network device may include an energy saving action to be taken. After receiving the feedback information, the first network device may obtain other data from the third network device, for example, a network performance indicator obtained after the energy saving action is taken, to evaluate the model.

Correspondingly, the first network device receives the actual value or other performance data.

S409: The first network device evaluates the performance of the model.

Specifically, the first network device evaluates the performance of the model based on the feedback information, or the first network device evaluates the performance of the model based on the other data or the actual value of the model and the feedback information that are received in step S408.

Optionally, the first network device may adjust a model with relatively poor performance. An adjustment manner includes but is not limited to the following:
retraining the model;
invoking another model that may be used for data analytics, in which case, for example, a model with higher precision may be selected; and
collecting new data to train a new model from scratch, and optionally, re-performing data preprocessing, feature selection, or the like.

S410: The first network device sends second configuration information to the second network device.

Specifically, when the model is temporarily unavailable because retraining the model or training the model again takes an excessively long time, the first network device may send the second configuration information to the second network device to indicate that a particular analytics type cannot be provided temporarily. The information may include an analytics identifier (analytics ID). It should be noted that this step is optional.

This embodiment provides a flexible method for feeding back data analytics effect. The second network device may feed back, to the first network device based on a configuration of the first network device, feedback information of a type needed by the first network device, thereby improving feedback flexibility. In some scenarios, a transmission resource may be further saved. The first network device may determine the performance of the model based on the feedback information, and if the performance of the model is relatively poor, further adjust a data analytics policy to ensure data analytics effect.

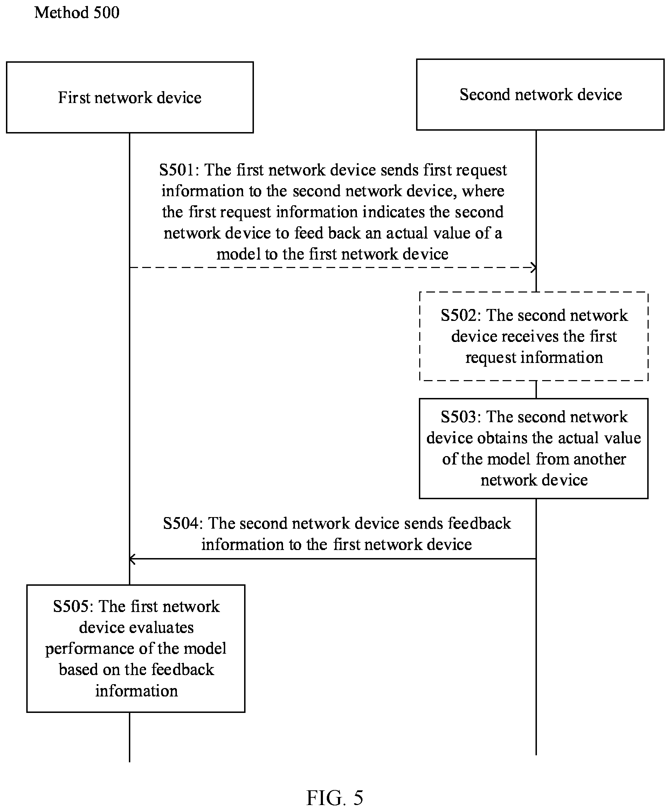

FIG. 5 shows another example of a method for feeding back data analytics effect according to this application. As shown in the figure, the method 500 includes the following steps.

S501: A first network device sends first request information to a second network device, where the first request information indicates the second network device to feed back an actual value of a model to the first network device.

It should be noted that this step is optional, and that the second network device may alternatively send the actual value of the model to the first network device by default.

It should be noted that the first request information may be included in an analytics report notification, or may be sent as a message separately. Related steps before this step and a specific configuration method of the configuration information are similar to those in the method 300. For details, refer to related descriptions in the method 300.

S502: The second network device receives the first request information.

In this method embodiment, the second network device cannot output the actual value of the model, and therefore requests the actual value of the model from a third network device. By way of example and not limitation, in a handover optimization scenario, the second network device is a source base station, and the source base station cannot obtain QoE information of UE after a handover. Therefore, the second network device requests the QoE information of the UE after the handover from the third network device, namely, a target base station, and sends the QoE information to the first network device as feedback information.

It should be noted that, in this method embodiment, a new interface is added, so that the second network device obtains the actual value of the model from the third network device.

S503: The second network device obtains the actual value of the model from another network device.

S504: The second network device sends the feedback information to the first network device.

The second network device sends the actual value of the model to the first network device as the feedback information.

S505: The first network device receives the actual value of the model, and evaluates performance of the model based on the actual value of the model.

In this method embodiment, a new network interface is added. When the second network device cannot obtain the actual value of the model, the second network device may obtain the actual value of the model from the another network device, and feed back the actual value of the model to the first network device as the feedback information. In this way, the first network device determines the performance of the model based on the actual value of the model, and further trains a model with relatively poor performance, to ensure data analytics effect.

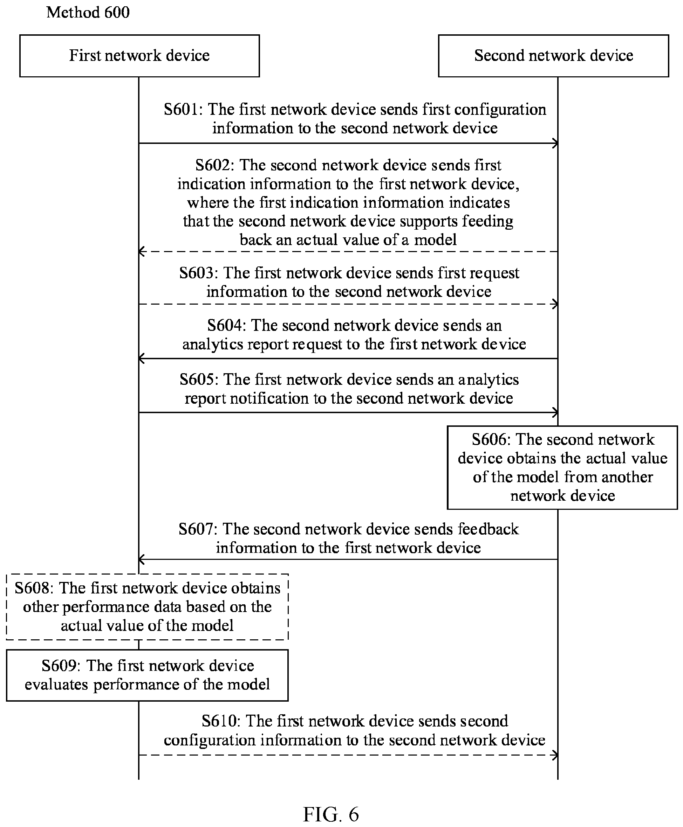

FIG. 6 shows yet another example of a method for feeding back data analytics effect according to this application. As shown in the figure, the method 600 includes the following steps.

S601: A first network device sends first configuration information to a second network device.

This step is similar to step S401 in the method 400. For details, refer to related descriptions in step S401.

S602: The second network device sends first indication information to the first network device, where the first indication information indicates that the second network device supports feeding back an actual value of a model.

It should be noted that this step is optional, and the second network device may feed back the actual value of the model, or the actual value of the model may be a default value of the first network device.

S603: The first network device sends first request information to the second network device.

Specifically, the first request information requests the second network device to feed back the actual value of the model. It should be noted that this step is optional, and the second network device may feed back the actual value of the model to the first network device by default.

It should be noted that the first request information may be sent as a separate piece of information in step S602 by the first network device to the second network device, or may be included in an analytics report notification message in step S604. In some embodiments, the first request information is sent in advance as a separate piece of information by the first network device to the second network device. In this way, the information is decoupled from an analytics report notification. For a same analytics type, the first request information needs to be sent only once, without a need to repeatedly carry the information in each analytics report notification. This reduces overheads of some transmission resources.

For specific network signaling and content of the message, refer to related descriptions in step S403.

S604: The second network device sends an analytics report request to the first network device.

For this step, refer to related descriptions in step S404.

S605: The first network device sends the analytics report notification to the second network device.

It should be noted that the first request information in step S602 may be included in the analytics report notification, and is not sent as a separate message.

For a specific description of this step, refer to related descriptions in step S405.

S606: The second network device obtains the actual value of the model from another network device.

Specifically, the second network device obtains the actual value of the model from the another network device based on the first request information through a new network interface.

S607: The second network device sends feedback information to the first network device.

S608: The first network device obtains other performance data based on the actual value of the model.

It should be noted that the first network device may not be able to evaluate performance of the model based on the actual value of the model alone. The first network device obtains the other performance data as needed, and further evaluates the model based on the actual value and the performance data.

It should be noted that this step is optional.

S609: The first network device evaluates the performance of the model.

This step is similar to step S409 in the method 400. Refer to related descriptions in S409.

S610: The first network device sends second configuration information to the second network device. This step is similar to step S410 in the method 400. Refer to related descriptions in S410.

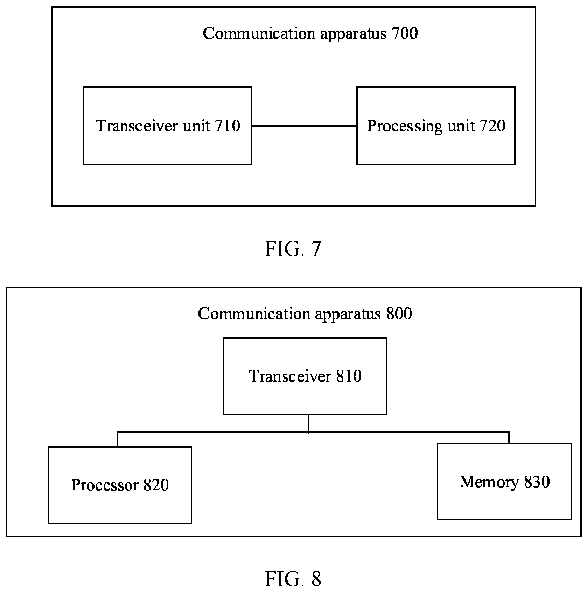

FIG. 7 is a schematic diagram of a communication apparatus 700 according to an embodiment of this application. Units in the communication apparatus 700 may be implemented by using software.

In some embodiments, the communication apparatus 700 may be the first network device in the foregoing method embodiment 300, or may be a chip configured to implement a function of the first network device in the foregoing method embodiment. It should be understood that the communication apparatus 700 may correspond to the steps corresponding to the first network device in the method 300 in embodiments of this application. The communication apparatus 700 includes:
a transceiver unit 710, configured to send a first type of feedback information to a second network device; and
a processing unit 720, configured to determine performance of a model based on the feedback information.

Specifically, the first type includes one or more of the following types: a model evaluation indicator, operation indication information, and a network performance indicator.

The model evaluation indicator is used to evaluate the performance of the model. Specifically, the model evaluation indicator is an indicator that may be used to evaluate the performance of the model. Common evaluation indicators include a precision rate, an accuracy rate, an error rate, a recall rate, a mean squared error, a root mean squared error, a root mean squared logarithmic error, an average absolute error, and the like. The processing unit 720 may determine the performance of the model based on the model evaluation indicator that is fed back, and adjust a model with poor performance. The model evaluation indicator may be obtained based on a predicted value of the model provided by the processing unit 720 and an actual value of the model obtained by the second network device.

By way of example and not limitation, in some scenarios, the processing unit 720 requires the second network device to feed back the model evaluation indicator, and the second network device may obtain the actual value of the model. Further, the second network device may obtain, based on the predicted value of the model and the actual value of the model, a first indicator value as a value of the model evaluation indicator for feedback.

By way of example and not limitation, in some scenarios, the processing unit 720 requires the second network device to feed back the model evaluation indicator, and the second network device cannot obtain the actual value of the model. The second network device may request the actual value of the model from a fifth network device. Further, the second network device obtains, based on the actual value of the model obtained through requesting and the predicted value provided by the processing unit 720, a first indicator value as a value of the model evaluation indicator for feedback.

It should be noted that the first indicator value may be obtained through calculation based on the predicted value of the model and at least one actual value of the model, and may be the precision rate, accuracy rate, error rate, recall rate, mean squared error, root mean squared error, root mean squared logarithmic error, average absolute error, or the like of the model. In some scenarios, for example, when there are a plurality of actual values, some feedback resources may be saved by feeding back the model evaluation indicator.

The operation indication information is used to describe a specific action to be taken based on a recommendation of the processing unit 720 or based on a predicted value of the processing unit 720 after the second network device receives an analytics report, and includes the specific action to be taken, a timestamp of the action to be taken, and the like.

In some embodiments, the processing unit 720 may collect, from a third network device based on the operation indication information fed back by the second network device, related data or an actual value of the model obtained after the second network device performs a recommended action, to determine the performance of the model, thereby adjusting a model with poor performance. It should be noted that the related data may be a corresponding network performance indicator obtained after the recommended action is performed.

By way of example and not limitation, the processing unit 720 may collect, from the third network device based on the operation indication information fed back by the second network device, the actual value of the model obtained after the recommended action is performed. In a handover optimization scenario, the second network device may be a source base station. The second network device may request a handover optimization analytics report from the processing unit 720, and make a handover decision with assistance of an MDAS. The handover optimization analytics report includes the recommended action, and may further include a predicted value obtained after the action is performed, namely, a predicted QoE. In other words, the predicted QoE is QoE that can be achieved after UE is handed over to a specific target gNB. A source gNB may select, with reference to a predicted result in the analytics report, a most appropriate target gNB to perform a handover. In this case, the processing unit 720 requires the second network device to feed back the operation indication information, and the second network device may return a handover action to be taken and a timestamp of the action to be taken. Optionally, the processing unit 720 may obtain actual QoE from the third network device (which may be a target base station) based on the operation indication information fed back by the second network device, and then evaluate the performance of the model based on the feedback information and the actual value of the model.

By way of example and not limitation, in an energy saving optimization scenario, the analytics report provided by the processing unit 720 for the second network device includes an energy saving suggestion. Specifically, the suggestion included may be: a recommended cell to enter an energy saving state (recommended NR Cell to enter ES state), a recommended candidate cell with precedence for taking over traffic of an energy saving cell (recommended candidate cells with precedence for taking over the traffic of the ES-Cell), and a time to enable and disable an energy saving state (a time period, during which ES is or not allowed). In this scenario, the analytics report provides a recommendation. After performing an action corresponding to the recommendation, the second network device feeds back the operation indication information to the transceiver unit 710. The transceiver unit 710 receives the operation indication information, and may obtain, from the third network device, a network performance indicator obtained after the action is performed, and then evaluate the model based on the feedback information and the network performance indicator.

The network performance indicator is an indicator that is defined by the processing unit 720 and that may describe network performance, for example, a key performance indicator (Key Performance Indicator, KPI) defined in standards, or a customized optimization objective function. The second network device may perform an action based on the predicted value of the model provided by the processing unit 720 or the recommendation provided by the processing unit 720, obtain some network performance indicators after performing the action, and further send the feedback information to the transceiver unit 710. The feedback information may be data corresponding to the network performance indicator. The processing unit 720 determines, based on the network performance indicator fed back, whether expected network performance is achieved, determines the performance of the model, and adjusts a model with poor performance.

In some possible implementations, the network performance indicator may be a network performance indicator obtained after the recommended action is performed. It should be understood that the recommended action may correspond to the operation indication information. For example, the processing unit 720 may request the second network device to feed back the operation indication information, and content of the operation indication information fed back by the second network device is an action to be performed based on the recommendation. Then, the processing unit 720 may obtain, from the third network device based on the operation indication information, the network performance indicator obtained after the recommended action is performed, and evaluate the model. The processing unit 720 may alternatively request the second network device to directly feed back the network performance indicator. After performing the recommended action, the second network device obtains the network performance indicator from a fourth network device, and feeds back the network performance indicator to the transceiver unit 710 as the feedback information. For a specific example, refer to related descriptions in the operation indication information.

It should be noted that the first type of the feedback information may be configured by using feedbackInfo signaling. In different scenarios, an optional value of feedbackInfo is different. Specifically, the value of feedbackInfo indicates the first type of the feedback information sent by the second network device to the transceiver unit 710. Further, the value may determine specific content of the feedback information needed in the type. By way of example and not limitation, in the handover optimization scenario, feedbackInfo = actionTaken indication indicates that the second network device needs to feed back a finally determined target gNB identifier and a handover time point. In the energy saving scenario, feedbackInfo = actionTaken indication indicates that the second network device needs to feed back a finally taken energy saving action, namely, a cell identifier and a time point for enabling/disabling an energy saving feature. In the energy saving scenario, feedbackInfo = energy efficiency (Energy Efficiency, EE) indicates that the second network device needs to feed back a value of an energy efficiency KPI obtained after a specified energy saving action is performed. A possible manner of defining the EE KPI is: EE = Total network throughput/Total network energy consumption.

It should be noted that the first type of the feedback information may be separately sent as a separate message before an analytics report notification is sent, or may be included in the analytics report notification.

In some embodiments, a second type, supported by the second network device, of the feedback information may be known by the processing unit 720 by default. That is, a type of the feedback information that can be fed back by the second network device is known by the processing unit 720. Further, the processing unit 720 determines the first type of the feedback information based on the second type. That is, the processing unit 720 indicates, based on a feedback capability of the second network device, the second network device to feed back a specific type of information.

In some embodiments, the processing unit 720 does not know a second type, supported by the second network device, of the feedback information, and the second network device may send first indication information to the transceiver unit 710, where the first indication information indicates the second type, supported by the second network device, of the feedback information. That is, the second network device reports a feedback capability. Further, the processing unit 720 determines the first type of the feedback information based on the first indication information. Optionally, the first indication information may be sent by the second network device to the transceiver unit 710 before the transceiver unit 710 sends the first type of the feedback information, to indicate a reporting capability of the second network device in advance. Optionally, the first indication information may be sent to the transceiver unit 710 after the transceiver unit 710 sends the first type of the feedback information to the second network device. Specifically, the second network device receives the first type of the feedback information, finds that the second network device cannot report feedback information corresponding to the first type, and further sends the first indication information to the transceiver unit 710 to report the feedback capability.

It should be noted that the first indication information indicates a type of feedback information that can be fed back by the second network device for a particular analytics type. Optionally, the first indication information includes an analytics identifier, and further includes a type of feedback information that can be fed back and that corresponds to the analytics identifier.

It should be noted that before this step, the transceiver unit 710 sends first configuration information to the second network device.

It should be noted that, after the transceiver unit 710 sends the first configuration information to the second network device, the second network device sends an analytics report request message to the transceiver unit 710. The analytics report request message is used to request an analytics report of a specified analytics type. Optionally, after receiving the analytics report request message from the second network device, the transceiver unit 710 further sends a response message to the second network device. The response message indicates that the transceiver unit 710 has received the analytics report request message. By way of example and not limitation, the response message may include an analytics identifier. The analytics identifier corresponds to an analytics identifier in the analytics report request message. It should be noted that the transceiver unit 710 receives the analytics report request message, further analyzes data based on the analytics report request message, prepares the analytics report, and sends the analytics report notification to the second terminal device. The analytics report notification may include but is not limited to: an analytics identifier (analytics ID), a generation time of analytics (timestamp of analytics), a valid period (valid period) of analytics, a confidence level (confidence level) of an analytics result, and a specific analytics result (analytics results). Optionally, the analytics result includes output of the model, for example, a specific predicted value (predicted value) and the recommendation (recommendation).

It should be noted that the first type of the feedback information may be included in the analytics report and sent, or may be sent as a separate message before the analytics report is sent. The first type of the feedback information is sent separately before the analytics report notification. Furthermore, before the second network device sends the analytics report request message to the transceiver unit 710, the transceiver unit 710 sends the first type of the feedback information to the second network device separately, and the first type of the feedback information is not included in the analytics report notification. For a same analytics report type, the first type of the feedback information needs to be sent only once, without a need to repeatedly carry the first type of the same feedback information in each analytics report notification. This may reduce some transmission overheads.

It should be noted that the first type of the feedback information may be determined by the processing unit 720 with reference to at least one of the following factors:
an analytics type, where the analytics type is a type required in the analytics report request message; and
a default second type of the feedback information, or the second type of the feedback information that is indicated in the first indication information sent by the second network device and that can be fed back by the second network device.

By way of example and not limitation, in the energy saving scenario, the value of feedbackInfo may be actionTaken indication or the EE KPI. However, if the first indication information sent by the second network device indicates that the type of the feedback information that can be fed back by the second network device includes only actionTaken indication, feedbackInfo can be configured only as actionTaken indication in this scenario.

The transceiver unit 710 is further configured to receive the feedback information sent by the second network device.

The processing unit 720 is further configured to determine the performance of the model based on the feedback information.

Optionally, after receiving the feedback information sent by the second network device, the transceiver unit 710 sends first request information to the third network device based on content of the feedback information. The first request information indicates that the transceiver unit 710 requests the actual value of the model or other data from the third network device. It should be noted that the other data may be a network performance indicator corresponding to the operation indication information in the related example in step S301. It should be noted that a model for which performance needs to be determined by the processing unit 720 is a model obtained through training by the processing unit 720. The third network device receives the first request information, and further sends the actual value of the model or other data to the transceiver unit 710 based on the first request information. The third network device may be a third-party device that can provide data. By way of example and not limitation, the third network device may be: an application function (Application Function, AF), a network data analytics function (Network Data Analytics Function, NWDAF), a base station, or the like. For example, in the handover optimization scenario, feedbackInfo = actionTaken indication in step S301. The feedback information of the second network device is a finally determined target base station identifier and a handover time point. The processing unit 720 sends the first request information to the third network device as needed, to further request actual quality of experience (Quality of Experience, QoE) obtained after a terminal device is handed over to an actual target base station. In this scenario, the third network device is a third-party device that can provide QoE information, and the third network device may be the target base station, the AF, or the like.

In some embodiments, the processing unit 720 determines the performance of the model based on the feedback information, or determines the performance of the model based on the feedback information and the actual value of the model, or determines the performance of the model based on the feedback information and the network performance indicator, and further adjusts a data analytics policy based on the performance of the model. It should be noted that the actual value of the model or the network performance indicator is obtained from the third-party device after the transceiver unit 710 receives the feedback information.

By way of example and not limitation, the processing unit 720 may adjust the data analytics policy from at least one of the following aspects:
retraining the model based on the feedback information;
if another model is available, analyzing data by using the another model, for example, a model with higher precision; and
collecting new training data to train a new model from scratch, and optionally, re-performing data preprocessing, feature selection, or the like.

Optionally, retraining the model or training a new model takes a long time, and consequently, the model may be temporarily unavailable. In a possible implementation, the transceiver unit 710 sends second configuration information to the second network device, where the second configuration information includes an analytics identifier. The configuration information indicates that an analytics type corresponding to the analytics identifier is temporarily unavailable.

In some embodiments, the communication apparatus 700 may be the first network device in the foregoing method embodiment 400, or may be a chip configured to implement a function of the first network device in the foregoing method embodiment. It should be understood that the communication apparatus 700 may correspond to the steps corresponding to the first network device in the method 400 in embodiments of this application. The communication apparatus 700 includes:
a transceiver unit 710, configured to send first configuration information to a second network device; and
a processing unit 720, configured to determine performance of a model based on feedback information.

Specifically, the first configuration information includes an analytics identifier (analytics ID), and the analytics identifier indicates an analytics type that can be provided by the second network device and the processing unit 720. Optionally, if the processing unit 720 may provide a plurality of types of analytics, a list of analytics identifiers may be included. A value of the analytics type under each analytics ID uniquely identifies a type of analytics. By way of example and not limitation, the value may be: handover optimization (handover optimization), coverage issue analysis (coverage issue analysis), MDA assisted energy saving (MDA assisted energy saving), or the like.

The transceiver unit 710 is further configured to receive first indication information, where the first indication information indicates a type, supported by the second network device, of the feedback information.

It should be understood that step is optional, and the second type may be set to a default value by the processing unit 720.

Specifically, the first indication information may indicate the second type, supported by the second network device for a particular analytics type, of the feedback information. The first indication information may include an analytics ID and the second type, supported and corresponding to the analytics ID, of the feedback information, and the second type, supported, of the feedback information may be represented by availableFeedbackInfo. A type, supported by the second network device, of the feedback information includes but is not limited to the following:

A model evaluation indicator: an indicator that may be used to evaluate the performance of the model. For a specific description, refer to the apparatus corresponding to the method 300.

Operation indication information: The operation indication information indicates information of an action to be taken after the second network device receives an analytics report. For a specific description, refer to the apparatus corresponding to the method 300.

A network performance indicator: an indicator that may be used to describe network performance. For a specific description, refer to the apparatus corresponding to the method 300.

The transceiver unit 710 is further configured to send a first type of the feedback information to the second network device.

Specifically, content of the message may include an analytics identifier (analytics ID) and the first type of the feedback information (feedbackInfo) corresponding to an analytics type of the identifier. An optional value of feedbackInfo includes but is not limited to: the model evaluation indicator, the operation indication information, the network performance indicator, and the like.

It should be noted that the first type of the feedback information may be sent as a separate piece of information by the transceiver unit 710 to the second network device, or may be included in an analytics report notification message. In some embodiments, the first type of the feedback information is sent in advance as a separate piece of information by the transceiver unit 710 to the second network device. In this way, the information is decoupled from an analytics report notification. For a same analytics type, the first type of the feedback information needs to be configured only once, without a need to repeatedly carry the information in each analytics report notification. This reduces overheads of some transmission resources.

It should be noted that, if the processing unit 720 does not default the second type, and the transceiver unit 710 does not receive the first indication information, the first network device may configure the first type incorrectly, and the first type of the feedback information sent by the transceiver unit 710 to the second network device may be a type that is not supported by the second network device, of the feedback information. Optionally, after the processing unit 720 configures the first type not supported, the second network device sends a feedback modification notification to the transceiver unit 710 to indicate the second type, supported by the second network device, of the feedback information. The processing unit 720 redetermines the first type of the feedback information based on the feedback modification notification, and resends the message to the second network device. It should be noted that the message of the first type of the feedback information sent for the first time and the message of the first type of the feedback information resent may be the same message. It should be noted that the feedback modification notification may include the type, not supported, of the feedback information (unavaliableInfo) and a reason (reason) why the type of the feedback information is not supported, and may further include a type, supported by the second network device, of the feedback information (avaliableInfo). Values of unavaliableInfo and avaliableInfo include but are not limited to: the model evaluation indicator, the operation indication information, the network performance indicator, and the like. It should be noted that the feedback modification notification and the first indication information may be the same message.

The transceiver unit 710 is further configured to receive an analytics report request sent by the second network device.

Specifically, the second network device may request an analytics report of a particular analytics type. Content of the message includes an analytics ID. Optionally, the message may further include one or more of the following: an analytics area (area), a report method (area), a report period (area), and the like.

Optionally, the transceiver unit 710 receives the analytics report request, and sends a response message to the second network device. The response message may include an analytics ID to indicate that the transceiver unit 710 has received the request.

The transceiver unit 710 is further configured to send the analytics report notification to the second network device.

It should be noted that the message of the first type of the feedback information may be included in the analytics report notification, and is not sent as a separate message.

Specifically, after receiving the analytics report request, the transceiver unit 710 analyzes data, prepares the analytics report, and further sends the analytics report notification to the second network device upon request of the second network device. The analytics report notification includes but is not limited to: an analytics identifier (analytics ID), a generation time of analytics (timestamp of analytics), a valid period (valid period) of analytics, a confidence level (confidence level) of an analytics result, and a specific analytics result (analytics results). When the first type of the feedback information is included in the analytics report notification, the message further includes the first type of the feedback information (feedbackInfo) and a corresponding value.

The transceiver unit 710 is further configured to receive the feedback information.

The transceiver unit 710 is further configured to send request information to a third network device.

Specifically, after receiving the feedback information, the transceiver unit 710 needs more data to evaluate the performance of the model, and may send the request information to the third network device to request more other data or an actual value of the model. By way of example and not limitation, in a handover scenario, the first type corresponding to the feedback information returned by the second network device is the operation indication information, and the feedback information of the second network device may include an action to be performed and a timestamp of the action to be performed. After receiving the feedback information, the transceiver unit 710 may obtain actual QoE of UE from the third network device (a target base station) to evaluate the performance of the model. By way of example and not limitation, in an energy saving scenario, the first type corresponding to the feedback information returned by the second network device is the operation indication information, and the feedback information of the second network device may include an energy saving action to be taken. After receiving the feedback information, the transceiver unit 710 may obtain other data from the third network device, for example, a network performance indicator obtained after the energy saving action is taken, to evaluate the model.

Correspondingly, the transceiver unit 710 receives the actual value or other performance data.

The processing unit 720 is configured to evaluate the performance of the model.

Specifically, the processing unit 720 evaluates the performance of the model based on the feedback information, or the processing unit 720 evaluates the performance of the model based on the other data or the actual value of the model and the feedback information that are received.

Optionally, the processing unit 720 may adjust a model with relatively poor performance. An adjustment manner includes but is not limited to the following:
retraining the model;
invoking another model that may be used for data analytics, in which case, for example, a model with higher precision may be selected; and
collecting new data to train a new model from scratch, and optionally, re-performing data preprocessing, feature selection, or the like.

The transceiver unit 710 is further configured to send second configuration information.

Specifically, when the model is temporarily unavailable because retraining the model or training the model again takes an excessively long time, the processing unit 710 may send the second configuration information to the second network device to indicate that a particular analytics type cannot be provided temporarily. The information may include an analytics identifier (analytics ID).

In some embodiments, the communication apparatus 700 may be the first network device in the foregoing method embodiment 500, or may be a chip configured to implement a function of the first network device in the foregoing method embodiment. It should be understood that the communication apparatus 700 may correspond to the steps corresponding to the first network device in the method 500 in embodiments of this application. The communication apparatus 700 includes:
a transceiver unit 710, configured to send first request information to a second network device; and
a processing unit 720, configured to evaluate performance of a model based on an actual value of the model.

The first request information indicates the second network device to feed back the actual value of the model to the transceiver unit 710.

It should be noted that this step is optional, and that the second network device may alternatively send the actual value of the model to the transceiver unit 710 by default.

It should be noted that the first request information may be included in an analytics report notification, or may be sent as a message separately. Related steps before this step and a specific configuration of the configuration information are similar to those of the related apparatus corresponding to the method 300. For details, refer to related descriptions of the apparatus corresponding to the method 300.

The transceiver unit 710 is further configured to receive feedback information sent by the second network device.

The feedback information is the actual value of the model.

In some embodiments, the communication apparatus 700 may be the first network device in the foregoing method embodiment 600, or may be a chip configured to implement a function of the first network device in the foregoing method embodiment. It should be understood that the communication apparatus 700 may correspond to the steps corresponding to the first network device in the method 600 in embodiments of this application. The communication apparatus 700 includes:
a transceiver unit 710, configured to send first configuration information to a second network device; and
a processing unit 720, configured to determine performance of a model based on feedback information.

The transceiver unit 710 is further configured to receive first indication information sent by the second network device, where the first indication information indicates that the second network device supports feeding back an actual value of the model. It should be noted that the second network device may feed back the actual value of the model, or the actual value of the model may be a default value of the first network device.

The transceiver unit 710 is further configured to send first request information to the second network device.

Specifically, the first request information requests the second network device to feed back the actual value of the model. It should be noted that this step is optional, and that the second network device may feed back the actual value of the model to the transceiver unit 710 by default.

It should be noted that the first request information may be sent as a separate piece of information by the transceiver unit 710 to the second network device, or may be included in an analytics report notification message. In some embodiments, the first request information is sent in advance as a separate piece of information by the transceiver unit 710 to the second network device. In this way, the information is decoupled from an analytics report notification. For a same analytics type, the first request information needs to be sent only once, without a need to repeatedly carry the information in each analytics report notification. This reduces overheads of some transmission resources.

For specific network signaling and content of the message, refer to related descriptions in the apparatus corresponding to the method 400.

The transceiver unit 710 is further configured to receive the analytics report notification sent by the second network device.

The transceiver unit 710 is further configured to receive the feedback information.

The processing unit 720 is further configured to obtain other performance data based on the actual value of the model.

It should be noted that the processing unit 720 may not be able to evaluate the performance of the model based on the actual value of the model alone. The first network device obtains the other performance data as needed, and further evaluates the model based on the actual value and the performance data.

The processing unit 720 is further configured to determine second configuration information.

The transceiver unit 710 is further configured to send the second configuration information to the second network device.

In some embodiments, the communication apparatus 700 may be the second network device in the foregoing method embodiment 300, or may be a chip configured to implement a function of the second network device in the foregoing method embodiment. It should be understood that the communication apparatus 700 may correspond to the steps corresponding to the second network device in the method 300 in embodiments of this application. The communication apparatus 700 includes:
a transceiver unit 710, configured to receive a first type of feedback information from a first network device; and
a processing unit 720, configured to determine the feedback information based on the first type of the feedback information.

Specifically, the first type includes one or more of the following types: a model evaluation indicator, operation indication information, and a network performance indicator.

The model evaluation indicator is used to evaluate performance of a model. Specifically, the model evaluation indicator is an indicator that may be used to evaluate the performance of the model. Common evaluation indicators include a precision rate, an accuracy rate, an error rate, a recall rate, a mean squared error, a root mean squared error, a root mean squared logarithmic error, an average absolute error, and the like. The first network device may determine the performance of the model based on the model evaluation indicator that is fed back, and adjust a model with poor performance. The model evaluation indicator may be obtained based on a predicted value of the model provided by the first network device and an actual value of the model obtained by the processing unit 720.

By way of example and not limitation, in some scenarios, the first network device requires the processing unit 720 to feed back the model evaluation indicator, and the processing unit 720 may obtain the actual value of the model. Further, the processing unit 720 may obtain, based on the predicted value of the model and the actual value of the model, a first indicator value as a value of the model evaluation indicator for feedback.

By way of example and not limitation, in some scenarios, the first network device requires the processing unit 720 to feed back the model evaluation indicator, and the processing unit 720 cannot obtain the actual value of the model. The transceiver unit 710 may request the actual value of the model from a fifth network device. Further, the processing unit 720 obtains, based on the actual value of the model obtained through requesting and the predicted value provided by the first network device, a first indicator value as a value of the model evaluation indicator for feedback.

It should be noted that the first indicator value may be obtained through calculation based on the predicted value of the model and at least one actual value of the model, and may be the precision rate, accuracy rate, error rate, recall rate, mean squared error, root mean squared error, root mean squared logarithmic error, average absolute error, or the like of the model. In some scenarios, for example, when there are a plurality of actual values, some feedback resources may be saved by feeding back the model evaluation indicator.

The operation indication information is used to describe a specific action to be taken based on a recommendation of the first network device or based on a predicted value of the first network device after the transceiver unit 710 receives an analytics report, and includes the specific action to be taken, a timestamp of the action to be taken, and the like.

In some embodiments, the first network device may collect, from a third network device based on the operation indication information fed back by the transceiver unit 710, related data or an actual value of the model obtained after the processing unit 720 performs a recommended action, to determine the performance of the model, thereby adjusting a model with poor performance. It should be noted that the related data may be a corresponding network performance indicator obtained after the recommended action is performed.

By way of example and not limitation, the first network device may collect, from the third network device based on the operation indication information fed back by the transceiver unit 710, the actual value of the model obtained after the recommended action is performed. In a handover optimization scenario, the apparatus may be a source base station. The transceiver unit 710 may request a handover optimization analytics report from the first network device, and make a handover decision with assistance of an MDAS. The handover optimization analytics report includes the recommended action, and may further include a predicted value obtained after the action is performed, namely, a predicted QoE. In other words, the predicted QoE is QoE that can be achieved after UE is handed over to a specific target gNB. A source gNB may select, with reference to a predicted result in the analytics report, a most appropriate target gNB to perform a handover. In this case, the first network device requires the transceiver unit 710 to feed back the operation indication information, and the transceiver unit 710 may return a handover action to be taken and a timestamp of the action to be taken. Optionally, the first network device may obtain actual QoE from the third network device (which may be a target base station) based on the operation indication information fed back by the transceiver unit 710, and then evaluate the performance of the model based on the feedback information and the actual value of the model.

By way of example and not limitation, in an energy saving optimization scenario, the analytics report provided by the first network device for the processing unit 720 includes an energy saving suggestion. Specifically, the suggestion included may be: a recommended cell to enter an energy saving state (recommended NR Cell to enter ES state), a recommended candidate cell with precedence for taking over traffic of an energy saving cell (recommended candidate cells with precedence for taking over the traffic of the ES-Cell), and a time to enable and disable an energy saving state (a time period, during which ES is or not allowed). In this scenario, the analytics report provides a recommendation. After performing an action corresponding to the recommendation, the processing unit 720 feeds back the operation indication information to the first network device. The first network device receives the operation indication information, and may obtain, from the third network device, a network performance indicator obtained after the action is performed, and then evaluate the model based on the feedback information and the network performance indicator.

The network performance indicator is an indicator that is defined by the first network device and that may describe network performance, for example, a key performance indicator (Key Performance Indicator, KPI) defined in standards, or a customized optimization objective function. The processing unit 720 may perform an action based on the predicted value of the model provided by the first network device or the recommendation provided by the first network device, obtain some network performance indicators after performing the action, and further send the feedback information to the first network device. The feedback information may be data corresponding to the network performance indicator. The first network device determines, based on the network performance indicator fed back, whether expected network performance is achieved, determines the performance of the model, and adjusts a model with poor performance.

In some possible implementations, the network performance indicator may be a network performance indicator obtained after the recommended action is performed. It should be understood that the recommended action may correspond to the operation indication information. For example, the first network device may request the transceiver unit 710 to feed back the operation indication information, and content of the operation indication information fed back by the transceiver unit 710 is an action to be performed based on the recommendation. Then, the first network device may obtain, from the third network device based on the operation indication information, the network performance indicator obtained after the recommended action is performed, and evaluate the model. The first network device may alternatively request the transceiver unit 710 to directly feed back the network performance indicator. After performing the recommended action, the processing unit 720 obtains the network performance indicator from a fourth network device, and feeds back the network performance indicator to the first network device as the feedback information. For a specific example, refer to related descriptions in the operation indication information.

It should be noted that the first type of the feedback information may be configured by using feedbackInfo signaling. In different scenarios, an optional value of feedbackInfo is different. Specifically, the value of feedbackInfo indicates the first type of the feedback information sent by the transceiver unit 710 to the first network device. Further, the value may determine specific content of the feedback information needed in the type. By way of example and not limitation, in the handover optimization scenario, feedbackInfo = actionTaken indication indicates that the transceiver unit 710 needs to feed back a finally determined target gNB identifier and a handover time point. In the energy saving scenario, feedbackInfo = actionTaken indication indicates that the transceiver unit 710 needs to feed back a finally taken energy saving action, namely, a cell identifier and a time point for enabling/disabling an energy saving feature. In the energy saving scenario, feedbackInfo = energy efficiency (Energy Efficiency, EE) indicates that the transceiver unit 710 needs to feed back a value of an energy efficiency KPI obtained after a specified energy saving action is performed. A possible manner of defining the EE KPI is: EE = Total network throughput/Total network energy consumption.

It should be noted that the first type of the feedback information may be separately sent as a separate message before an analytics report notification is sent, or may be included in the analytics report notification.

In some embodiments, a second type, supported by the device, of the feedback information may be known by the first network device by default. That is, a type of the feedback information that can be fed back by the processing unit 720 is known by the first network device. Further, the first network device determines the first type of the feedback information based on the second type. That is, the first network device indicates, based on a feedback capability of the processing unit 720, the second network device to feed back a specific type of information.

In some embodiments, the first network device does not know a second type, supported by the processing unit 720, of the feedback information, and the transceiver unit 710 may send first indication information to the first network device, where the first indication information indicates the second type, supported by the processing unit 720, of the feedback information. That is, the transceiver unit 710 reports a feedback capability. Further, the first network device determines the first type of the feedback information based on the first indication information. Optionally, the first indication information may be sent by the transceiver unit 710 to the first network device before the first network device sends the first type of the feedback information, to indicate a reporting capability of the transceiver unit 710 in advance. Optionally, the first indication information may be sent to the first network device after the first network device sends the first type of the feedback information to the transceiver unit 710. Specifically, the transceiver unit 710 receives the first type of the feedback information, finds that the transceiver unit 710 cannot report feedback information corresponding to the first type, and further sends the first indication information to the first network device to report the feedback capability.

It should be noted that the first indication information indicates a type of feedback information that can be fed back by the processing unit 720 for a particular analytics type. Optionally, the first indication information includes an analytics identifier, and further includes a type of feedback information that can be fed back and that corresponds to the analytics identifier.

It should be noted that before this step, the first network device sends first configuration information to the transceiver unit 710.

It should be noted that, after the first network device sends the first configuration information to the transceiver unit 710, the transceiver unit 710 sends an analytics report request message to the first network device. The analytics report request message is used to request an analytics report of a specified analytics type. Optionally, after receiving the analytics report request message from the transceiver unit 710, the first network device further sends a response message to the transceiver unit 710. The response message indicates that the first network device has received the analytics report request message. By way of example and not limitation, the response message may include an analytics identifier. The analytics identifier corresponds to an analytics identifier in the analytics report request message. It should be noted that the first network device receives the analytics report request message, further analyzes data based on the analytics report request message, prepares the analytics report, and sends the analytics report notification to the transceiver unit 710. The analytics report notification may include but is not limited to: an analytics identifier (analytics ID), a generation time of analytics (timestamp of analytics), a valid period (valid period) of analytics, a confidence level (confidence level) of an analytics result, and a specific analytics result (analytics results). Optionally, the analytics result includes output of the model, for example, a specific predicted value (predicted value) and the recommendation (recommendation).

It should be noted that the first type of the feedback information may be included in the analytics report and sent, or may be sent as a separate message before the analytics report is sent. The first type of the feedback information is sent separately before the analytics report notification. Furthermore, before the transceiver unit 710 sends the analytics report request message to the first network device, the first network device sends the first type of the feedback information to the transceiver unit 710 separately, and the first type of the feedback information is not included in the analytics report notification. For a same analytics report type, the first type of the feedback information needs to be sent only once, without a need to repeatedly carry the first type of the same feedback information in each analytics report notification. This may reduce some transmission overheads.

It should be noted that the first type of the feedback information may be determined by the first network device with reference to at least one of the following factors:
an analytics type, where the analytics type is a type required in the analytics report request message; and
a default second type of the feedback information, or the second type of the feedback information that is indicated in the first indication information sent by the transceiver unit 710 and that can be fed back by the processing unit 720.

By way of example and not limitation, in the energy saving scenario, the value of feedbackInfo may be actionTaken indication or the EE KPI. However, if the first indication information sent by the transceiver unit 710 indicates that the type of the feedback information that can be fed back by the processing unit 720 includes only actionTaken indication, feedbackInfo can be configured only as actionTaken indication in this scenario.

The transceiver unit 710 is further configured to receive the first type of the feedback information.

The processing unit 720 is further configured to send the feedback information to the first network device based on the first type of the feedback information.

Optionally, the feedback information may be determined by the processing unit 720 based on the first type of the feedback information. For example, the processing unit 720 may output the actual value of the model, and the first type indicates an average value of a difference between a predicted value of output of the model and the actual value of the model as the value of the model evaluation indicator for feedback. In this case, the processing unit 720 may obtain the average value based on the first type for feedback.

Alternatively, the feedback information may be obtained by the transceiver unit 710 from the fourth network device. For example, if the first type of the feedback information required by the first network device is the network performance indicator, the transceiver unit 710 may send the first type to the fourth network device, and obtain the network performance indicator from the fourth network device. Alternatively, the feedback information may be determined based on the actual value of the model and the predicted value of the model in the analytics report after the transceiver unit 710 obtains the actual value of the model from the fifth network device. Specifically, the transceiver unit 710 sends the first type of the feedback information to the fifth network device, and further receives the actual value of the model from the fifth network device.

The transceiver unit 710 is further configured to send the feedback information to the first network device.

In some embodiments, the communication apparatus 700 may be the second network device in the foregoing method embodiment 400, or may be a chip configured to implement a function of the second network device in the foregoing method embodiment. It should be understood that the communication apparatus 700 may correspond to the steps corresponding to the second network device in the method 400 in embodiments of this application. The communication apparatus 700 includes:
a transceiver unit 710, configured to receive first configuration information from a first network device; and
a processing unit 720, configured to send first indication information to the first network device.

Specifically, the first configuration information includes an analytics identifier (analytics ID), and the analytics identifier indicates an analytics type that can be provided by the processing unit 720 and the first network device. Optionally, if the first network device may provide a plurality of types of analytics, a list of analytics identifiers may be included. A value of the analytics type under each analytics ID uniquely identifies a type of analytics. By way of example and not limitation, the value may be: handover optimization (handover optimization), coverage issue analysis (coverage issue analysis), MDA assisted energy saving (MDA assisted energy saving), or the like.

The first indication information indicates a second type, supported by the second network device, of the feedback information. The second type may be set to a default value by the first network device.

Specifically, the first indication information may indicate the second type, supported by the second network device for a particular analytics type, of the feedback information. The first indication information may include an analytics ID and the second type, supported and corresponding to the analytics ID, of the feedback information, and the second type, supported, of the feedback information may be represented by availableFeedbackInfo. A type, supported by the processing unit 720, of the feedback information includes but is not limited to the following:

A model evaluation indicator: an indicator that may be used to evaluate performance of a model. For a specific description, refer to the apparatus corresponding to the method 300.

Operation indication information: The operation indication information indicates information of an action to be taken after the transceiver unit 710 receives an analytics report. For a specific description, refer to the apparatus corresponding to the method 300.

A network performance indicator: an indicator that may be used to describe network performance. For a specific description, refer to the apparatus corresponding to the method 300.

The transceiver unit is further configured to receive a first type of the feedback information sent by the first network device.

Specifically, content of the message may include an analytics identifier (analytics ID) and the first type of the feedback information (feedbackInfo) corresponding to an analytics type of the identifier. An optional value of feedbackInfo includes but is not limited to: the model evaluation indicator, the operation indication information, the network performance indicator, and the like.

It should be noted that the first type of the feedback information may be sent as a separate piece of information by the first network device to the transceiver unit 710, or may be included in an analytics report notification message. In some embodiments, the first type of the feedback information is sent in advance as a separate piece of information by the first network device to the transceiver unit 710. In this way, the information is decoupled from an analytics report notification. For a same analytics type, the first type of the feedback information needs to be configured only once, without a need to repeatedly carry the information in each analytics report notification. This reduces overheads of some transmission resources.

It should be noted that, if the first network device does not default the second type, the first network device may configure the first type incorrectly, and the first type of the feedback information sent by the first network device to the transceiver unit 710 may be a type that is not supported by the processing unit 720, of the feedback information. Optionally, after the first network device configures the first type not supported, the transceiver unit 710 sends a feedback modification notification to the first network device to indicate the second type, supported by the processing unit 720, of the feedback information. The first network device redetermines the first type of the feedback information based on the feedback modification notification, and resends the message to the transceiver unit 710. It should be noted that the message of the first type of the feedback information sent for the first time and the message of the first type of the feedback information resent may be the same message. It should be noted that the feedback modification notification may include the type, not supported, of the feedback information (unavaliableInfo) and a reason (reason) why the type of the feedback information is not supported, and may further include a type, supported by the second network device, of the feedback information (avaliableInfo). Values of unavaliableInfo and avaliableInfo include but are not limited to: the model evaluation indicator, the operation indication information, the network performance indicator, and the like. It should be noted that the feedback modification notification and the first indication information may be the same message.

The transceiver unit 710 is further configured to send an analytics report request to the first network device.

Specifically, the transceiver unit 710 may request an analytics report of a particular analytics type. Content of the message includes an analytics ID. Optionally, the message may further include one or more of the following: an analytics area (area), a report method (area), a report period (area), and the like.

Optionally, the first network device receives the analytics report request, and sends a response message to the transceiver unit 710. The response message may include an analytics ID to indicate that the first network device has received the request.

The transceiver unit 710 is further configured to receive the analytics report notification sent by the first network device.

It should be noted that the message of the first type of the feedback information may be included in the analytics report notification, and is not sent as a separate message.

Specifically, after receiving the analytics report request, the first network device analyzes data, prepares the analytics report, and further sends the analytics report notification to the transceiver unit 710 upon request of the processing unit 720. The analytics report notification includes but is not limited to: an analytics identifier (analytics ID), a generation time of analytics (timestamp of analytics), a valid period (valid period) of analytics, a confidence level (confidence level) of an analytics result, and a specific analytics result (analytics results). When the first type of the feedback information is included in the analytics report notification, the message further includes the first type of the feedback information (feedbackInfo) and a corresponding value.

The processing unit 720 is further configured to determine the feedback information based on the first type of the feedback information.

Optionally, the processing unit 720 may obtain an actual value of the model, process the data, and determine the feedback information. For a specific example, refer to the apparatus in the method 300.

Optionally, the transceiver unit 710 may send the first type of the feedback information to a fourth network device, and receive the feedback information from the fourth network device. For a specific example, refer to the apparatus in the method 300.

Optionally, the transceiver unit 710 may send request information to a fifth network device, obtain the actual value of the model from the fifth network device, and determine the feedback information based on the actual value and the first type of the feedback information. For a specific example, refer to the apparatus in the method 300.

In some embodiments, the communication apparatus 700 may be the second network device in the foregoing method embodiment 500, or may be a chip configured to implement a function of the second network device in the foregoing method embodiment. It should be understood that the communication apparatus 700 may correspond to the steps corresponding to the second network device in the method 500 in embodiments of this application. The communication apparatus 700 includes:
a transceiver unit 710, configured to receive first request information sent by a first network device.

A processing unit 720 cannot output an actual value of a model, and therefore requests the actual value of the model from a third network device. By way of example and not limitation, in a handover optimization scenario, the device is a source base station, and the source base station cannot obtain QoE information of UE after a handover. Therefore, the transceiver unit 710 requests the QoE information of the UE after the handover from the third network device, namely, a target base station, and sends the QoE information to the first network device as feedback information.

The transceiver unit 710 is further configured to receive the actual value of the model from another network device.

The transceiver unit 710 is further configured to send the feedback information to the first network device.

In some embodiments, the communication apparatus 700 may be the second network device in the foregoing method embodiment 600, or may be a chip configured to implement a function of the second network device in the foregoing method embodiment. It should be understood that the communication apparatus 700 may correspond to the steps corresponding to the second network device in the method 600 in embodiments of this application. The communication apparatus 700 includes:
a transceiver unit 710, configured to receive first configuration information from a first network device.

The transceiver unit 710 is further configured to send first indication information to the first network device, where the first indication information indicates that the second network device supports feeding back an actual value of a model.

The transceiver unit 710 is further configured to receive first request information sent by the first network device, where the first request information requests the transceiver unit 710 to feed back the actual value of the model. It should be noted that the transceiver unit 710 may feed back the actual value of the model to the first network device by default.

It should be noted that the first request information may be sent as a separate piece of information by the first network device to the transceiver unit 710, or may be included in an analytics report notification message. In some embodiments, the first request information is sent in advance as a separate piece of information by the first network device to the transceiver unit 710. In this way, the information is decoupled from an analytics report notification. For a same analytics type, the first request information needs to be sent only once, without a need to repeatedly carry the information in each analytics report notification. This reduces overheads of some transmission resources.

The transceiver unit 710 is further configured to send an analytics report request to the first network device.

The transceiver unit 710 is further configured to receive the analytics report notification from the first network device.

The transceiver unit 710 is further configured to receive the actual value of the model from another network device.

The transceiver unit 710 is further configured to send the feedback information to the first network device.

It should be noted that the feedback information is the actual value of the model.

FIG. 8 is a schematic diagram of a communication apparatus 800 according to an embodiment of this application. The communication apparatus 800 includes: a transceiver 810, a processor 820, and a memory 830. The memory 830 is configured to store instructions. The processor 820 is coupled to the memory 830, and is configured to execute the instructions stored in the memory, to perform the method provided in the foregoing embodiments of this application.

Specifically, the transceiver 810 in the communication apparatus 800 may correspond to the transceiver unit 710 in the communication apparatus 700, and the processor 820 in the communication apparatus 800 may correspond to the processing unit 720 in the communication apparatus 700.

It should be understood that the memory 830 and the processor 820 may be integrated into a processing apparatus. The processor 820 is configured to execute program code stored in the memory 830, to implement the foregoing functions. During specific implementation, the memory 830 may alternatively be integrated into the processor 820, or may be independent of the processor 820.

It should be understood that a specific process in which the transceiver and the processor perform the foregoing corresponding steps is described in detail in the foregoing method embodiments. For brevity, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An information transmission method, comprising:
sending (S301, S403), by a first network device, a first type of feedback information to a second network device, wherein the first type comprises one or more of the following: a model evaluation indicator, operation indication information, and a network performance indicator, the model evaluation indicator indicates performance of a model, the operation indication information indicates an operation to be performed based on an analytics result of the model, the network performance indicator indicates a network indicator obtained based on the analytics result of the model, and the first type is used to request the feedback information;
receiving (S303, S304, S407), by the first network device, the feedback information from the second network device based on the first type of the feedback information;
sending (S408), by the first network device, request information to a third network device to request more data to evaluate the performance of the model based on the feedback information from the second network device;
receiving, by the first network device, more data from the third network device based on the request information; and
determining (S305), by the first network device, the performance of the model based on the feedback information and the more data received from the third network device.

2. The method according to claim 1, further comprising:
receiving, by the first network device, first indication information from the second network device, wherein the first indication information indicates a second type, supported by the second network device, of the feedback information; and
determining, by the first network device, the first type based on the first indication information.

3. An information transmission method, comprising:
receiving (S301, S302, S403), by a second network device, a first type of feedback information from a first network device, wherein the first type comprises one or more of the following: a model evaluation indicator, operation indication information, and a network performance indicator, the model evaluation indicator indicates performance of a model, the operation indication information indicates an operation to be performed based on an analytics result of the model, the network performance indicator indicates a network indicator obtained based on the analytics result of the model, and the first type is used to request the feedback information; and
sending (S303), by the second network device, the feedback information to the first network device based on the first type of the feedback information, and wherein the feedback information is useable by the first network device to request more data, from a third network device, to evaluate performance of the model.

4. The method according to claim 3, wherein the sending, by the second network device, the feedback information to the first network device based on the first type of the feedback information comprises:
determining, by the second network device, the feedback information based on the first type of the feedback information; and
sending, by the second network device, the feedback information to the first network device.

5. The method according to claim 3, wherein the sending, by the second network device, the feedback information to the first network device based on the first type of the feedback information comprises:
receiving, by the second network device, the feedback information from a fourth network device; and
sending, by the second network device, the feedback information to the first network device.

6. The method according to claim 3, wherein the determining, by the second network device, the feedback information based on the first type of the feedback information comprises:
receiving, by the second network device, an actual value of the model from a fifth network device;
determining, by the second network device, the feedback information based on the first type and the actual value of the model; and
sending, by the second network device, the feedback information to the first network device.

7. The method according to any one of claims 3 to 6, further comprising:
sending, by the second network device, first indication information to the first network device, wherein the first indication information indicates a second type, supported by the second network device, of the feedback information.

8. A communication system, comprising the communication apparatus that is configured to perform the method according to any one of claims 1 to 2 and the communication apparatus that is configured to perform the method according to any one of claims 3 to 7.

9. A computer-readable storage medium, wherein the computer-readable storage medium stores computer instructions, and when the computer instructions are run on a computer, the computer is enabled to perform the communication method according to any one of claims 1 to 7.

10. A chip, comprising a processor and a memory, wherein the memory is configured to store a computer program, and the processor is configured to invoke and run a computer medium stored in the memory, to perform the method according to any one of claims 1 to 7.

11. A communication apparatus, comprising a module configured to perform the method according to any one of claims 1 to 2, or comprising a module configured to perform the method according to any one of claims 3 to 7.

## Patentansprüche

1. Informationsübertragungsverfahren, umfassend:
Senden (S301, S403), durch eine erste Netzwerkeinrichtung, eines ersten Typs von Rückkopplungsinformationen an eine zweite Netzwerkeinrichtung, wobei der erste Typ eines oder mehrere der Folgenden umfasst: einen Modellbewertungsindikator, Betriebsanzeigeinformationen und einen Netzwerkleistungsindikator, wobei der Modellbewertungsindikator die Leistung eines Modells anzeigt, die Betriebsanzeigeinformationen einen Vorgang, der basierend auf einem Analyseergebnis des Modells durchzuführen ist, anzeigen, der Netzwerkleistungsindikator einen Netzwerkindikator, der basierend auf dem Analyseergebnis des Modells erlangt wird, anzeigt und der erste Typ dazu verwendet wird, die Rückkopplungsinformationen anzufordern;
Empfangen (S303, S304, S407), durch die erste Netzwerkeinrichtung, der Rückkopplungsinformationen von der zweiten Netzwerkeinrichtung basierend auf dem ersten Typ der Rückkopplungsinformationen;
Senden (S408), durch die erste Netzwerkeinrichtung, von Anforderungsinformationen an eine dritte Netzwerkeinrichtung, um weitere Daten anzufordern, um die Leistung des Modells basierend auf den Rückkopplungsinformationen von der zweiten Netzwerkeinrichtung zu bewerten;
Empfangen, durch die erste Netzwerkeinrichtung, von weiteren Daten von der dritten Netzwerkeinrichtung basierend auf den Anforderungsinformationen; und
Bestimmen (S305), durch die erste Netzwerkeinrichtung, der Leistung des Modells basierend auf den Rückkopplungsinformationen und den weiteren Daten, die von der dritten Netzwerkeinrichtung empfangen werden.

2. Verfahren nach Anspruch 1, ferner umfassend:
Empfangen, durch die erste Netzwerkeinrichtung, von ersten Anzeigeinformationen von der zweiten Netzwerkeinrichtung, wobei die erste Anzeigeinformationen einen zweiten Typ der Rückkopplungsinformationen anzeigen, der durch die zweite Netzwerkeinrichtung unterstützt wird; und
Bestimmen, durch die erste Netzwerkeinrichtung, des ersten Typs basierend auf den ersten Anzeigeinformationen.

3. Informationsübertragungsverfahren, umfassend:
Empfangen (S301, S302, S403), durch eine zweite Netzwerkeinrichtung, eines ersten Typs von Rückkopplungsinformationen von einer ersten Netzwerkeinrichtung, wobei der erste Typ eines oder mehrere der Folgenden umfasst: einen Modellbewertungsindikator, Betriebsanzeigeinformationen und einen Netzwerkleistungsindikator, wobei der Modellbewertungsindikator die Leistung eines Modells anzeigt, die Betriebsanzeigeinformationen einen Vorgang, der basierend auf einem Analyseergebnis des Modells durchzuführen ist, anzeigen, der Netzwerkleistungsindikator einen Netzwerkindikator, der basierend auf dem Analyseergebnis des Modells erlangt wird, anzeigt und der erste Typ dazu verwendet wird, die Rückkopplungsinformationen anzufordern; und
Senden (S303), durch die zweite Netzwerkeinrichtung, der Rückkopplungsinformationen an die erste Netzwerkeinrichtung basierend auf dem ersten Typ der Rückkopplungsinformationen, und wobei die Rückkopplungsinformationen durch die erste Netzwerkeinrichtung dazu verwendbar sind, weitere Daten von einer dritten Netzwerkeinrichtung anzufordern, um die Leistung des Modells zu bewerten.

4. Verfahren nach Anspruch 3, wobei das Senden, durch die zweite Netzwerkeinrichtung, der Rückkopplungsinformationen an die erste Netzwerkeinrichtung basierend auf dem ersten Typ der Rückkopplungsinformationen Folgendes umfasst:
Bestimmen, durch die zweite Netzwerkeinrichtung, der Rückkopplungsinformationen basierend auf dem ersten Typ der Rückkopplungsinformationen; und
Senden, durch die zweite Netzwerkeinrichtung, der Rückkopplungsinformationen an die erste Netzwerkeinrichtung.

5. Verfahren nach Anspruch 3, wobei das Senden, durch die zweite Netzwerkeinrichtung, der Rückkopplungsinformationen an die erste Netzwerkeinrichtung basierend auf dem ersten Typ der Rückkopplungsinformationen Folgendes umfasst:
Empfangen, durch die zweite Netzwerkeinrichtung, der Rückkopplungsinformationen von einer vierten Netzwerkeinrichtung; und
Senden, durch die zweite Netzwerkeinrichtung, der Rückkopplungsinformationen an die erste Netzwerkeinrichtung.

6. Verfahren nach Anspruch 3, wobei das Bestimmen, durch die zweite Netzwerkeinrichtung, der Rückkopplungsinformationen basierend auf dem ersten Typ der Rückkopplungsinformationen Folgendes umfasst:
Empfangen, durch die zweite Netzwerkeinrichtung, eines tatsächlichen Werts des Modells von einer fünften Netzwerkeinrichtung;
Bestimmen, durch die zweite Netzwerkeinrichtung, der Rückkopplungsinformationen basierend auf dem ersten Typ und dem tatsächlichen Wert des Modells; und
Senden, durch die zweite Netzwerkeinrichtung, der Rückkopplungsinformationen an die erste Netzwerkeinrichtung.

7. Verfahren nach einem der Ansprüche 3 bis 6, ferner umfassend: Senden, durch die zweite Netzwerkeinrichtung, von ersten Anzeigeinformationen an die erste Netzwerkeinrichtung, wobei die ersten Anzeigeinformationen einen zweiten Typ der Rückkopplungsinformationen angeben, der durch die zweite Netzwerkeinrichtung unterstützt wird.

8. Kommunikationssystem, umfassend die Kommunikationsvorrichtung, die dazu konfiguriert ist, das Verfahren nach einem der Ansprüche 1 bis 2 durchzuführen, und die Kommunikationsvorrichtung, die dazu konfiguriert ist, das Verfahren nach einem der Ansprüche 3 bis 7 durchzuführen.

9. Computerlesbares Speichermedium, wobei das computerlesbare Speichermedium Computeranweisungen speichert und, wenn die Computeranweisungen auf einem Computer ausgeführt werden, es dem Computer ermöglicht wird, das Kommunikationsverfahren nach einem der Ansprüche 1 bis 7 durchzuführen.

10. Chip, umfassend einen Prozessor und einen Speicher, wobei der Speicher dazu konfiguriert ist, ein Computerprogramm zu speichern, und der Prozessor dazu konfiguriert ist, ein Computermedium, das in dem Speicher gespeichert ist, aufzurufen und auszuführen, um das Verfahren nach einem der Ansprüche 1 bis 7 durchzuführen.

11. Kommunikationsvorrichtung, umfassend ein Modul, das dazu konfiguriert ist, das Verfahren nach einem der Ansprüche 1 bis 2 durchzuführen, oder umfassend ein Modul, das dazu konfiguriert ist, das Verfahren nach einem der Ansprüche 3 bis 7 durchzuführen.

## Revendications

1. Procédé de transmission d'informations, comprenant :
l'envoi (S301, S403), par un premier dispositif réseau, d'un premier type d'informations de rétroaction à un deuxième dispositif réseau, dans lequel le premier type comprend un ou plusieurs des éléments suivants : un indicateur d'évaluation de modèle, des informations d'indication d'opération et un indicateur de performance réseau, l'indicateur d'évaluation de modèle indique les performances d'un modèle, les informations d'indication d'opération indiquent une opération à réaliser sur la base d'un résultat d'analyse du modèle, l'indicateur de performance réseau indique un indicateur de réseau obtenu sur la base du résultat d'analyse du modèle, et le premier type est utilisé pour demander les informations de rétroaction ;
la réception (S303, S304, S407), par le premier dispositif réseau, des informations de rétroaction provenant du deuxième dispositif réseau sur la base du premier type des informations de rétroaction ;
l'envoi (S408), par le premier dispositif réseau, d'informations de demande à un troisième dispositif réseau pour demander plus de données afin d'évaluer les performances du modèle sur la base des informations de rétroaction provenant du deuxième dispositif réseau ;
la réception, par le premier dispositif réseau, de plus de données provenant du troisième dispositif réseau sur la base des informations de demande ; et
la détermination (S305), par le premier dispositif réseau, des performances du modèle sur la base des informations de rétroaction et des données supplémentaires reçues en provenance du troisième dispositif réseau.

2. Procédé selon la revendication 1, comprenant également :
la réception, par le premier dispositif réseau, de premières informations d'indication provenant du deuxième dispositif réseau, dans lequel les premières informations d'indication indiquent un second type, pris en charge par le deuxième dispositif réseau, des informations de rétroaction ; et
la détermination, par le premier dispositif réseau, du premier type sur la base des premières informations d'indication.

3. Procédé de transmission d'informations, comprenant :
la réception (S301, S302, S403), par un deuxième dispositif réseau, d'un premier type d'informations de rétroaction provenant d'un premier dispositif réseau, dans lequel le premier type comprend un ou plusieurs des éléments suivants : un indicateur d'évaluation de modèle, des informations d'indication d'opération et un indicateur de performance réseau, l'indicateur d'évaluation de modèle indique les performances d'un modèle, les informations d'indication d'opération indiquent une opération à réaliser sur la base d'un résultat d'analyse du modèle, l'indicateur de performance réseau indique un indicateur de réseau obtenu sur la base du résultat d'analyse du modèle, et le premier type est utilisé pour demander les informations de rétroaction ; et
l'envoi (S303), par le deuxième dispositif réseau, des informations de rétroaction au premier dispositif réseau sur la base du premier type des informations de rétroaction, et dans lequel les informations de rétroaction peuvent être utilisées par le premier dispositif réseau pour demander plus de données, provenant d'un troisième dispositif réseau, pour évaluer les performances du modèle.

4. Procédé selon la revendication 3, dans lequel l'envoi, par le deuxième dispositif réseau, des informations de rétroaction au premier dispositif réseau sur la base du premier type des informations de rétroaction comprend :
la détermination, par le deuxième dispositif réseau, des informations de rétroaction sur la base du premier type des informations de rétroaction ; et
l'envoi, par le deuxième dispositif réseau, des informations de rétroaction au premier dispositif réseau.

5. Procédé selon la revendication 3, dans lequel l'envoi, par le deuxième dispositif réseau, des informations de rétroaction au premier dispositif réseau sur la base du premier type des informations de rétroaction comprend :
la réception, par le deuxième dispositif réseau, des informations de rétroaction provenant d'un quatrième dispositif réseau ; et
l'envoi, par le deuxième dispositif réseau, des informations de rétroaction au premier dispositif réseau.

6. Procédé selon la revendication 3, dans lequel la détermination, par le deuxième dispositif réseau, des informations de rétroaction sur la base du premier type des informations de rétroaction comprend :
la réception, par le deuxième dispositif réseau, d'une valeur réelle du modèle provenant d'un cinquième dispositif réseau ;
la détermination, par le deuxième dispositif réseau, des informations de rétroaction sur la base du premier type et de la valeur réelle du modèle ; et
l'envoi, par le deuxième dispositif réseau, des informations de rétroaction au premier dispositif réseau.

7. Procédé selon l'une quelconque des revendications 3 à 6, comprenant également :
l'envoi, par le deuxième dispositif réseau, de premières informations d'indication au premier dispositif réseau, dans lequel les premières informations d'indication indiquent un second type, pris en charge par le deuxième dispositif réseau, des informations de rétroaction.

8. Système de communication, comprenant l'appareil de communication qui est configuré pour réaliser le procédé selon l'une quelconque des revendications 1 à 2 et l'appareil de communication qui est configuré pour réaliser le procédé selon l'une quelconque des revendications 3 à 7.

9. Support de stockage lisible par ordinateur, dans lequel le support de stockage lisible par ordinateur stocke des instructions informatiques, et lorsque les instructions informatiques sont exécutées sur un ordinateur, l'ordinateur est activé pour réaliser le procédé de communication selon l'une quelconque des revendications 1 à 7.

10. Puce, comprenant un processeur et une mémoire, dans laquelle la mémoire est configurée pour stocker un programme informatique, et le processeur est configuré pour invoquer et faire fonctionner un support informatique stocké dans la mémoire, pour réaliser le procédé selon l'une quelconque des revendications 1 à 7.

11. Appareil de communication, comprenant un module configuré pour réaliser le procédé selon l'une quelconque des revendications 1 à 2, ou comprenant un module configuré pour réaliser le procédé selon l'une quelconque des revendications 3 à 7.
